# EUROPEAN PATENT APPLICATION

(11) **EP 4 831 348 A1**
(43) Date of publication of application: **28.10.2026**
(21) Application number: 24907297.6
(22) Date of filing: 12.12.2024
(51) Int. Cl.: C25B 9/23, C25B 1/04, C25B 9/00, C25B 11/081, C25B 11/097, C25B 13/08

(54) **MEMBRANE/CATALYST LAYER STRUCTURE, MEMBRANE/ELECTRODE ASSEMBLY, FUEL CELL, WATER ELECTROLYSIS CELL, AND WATER ELECTROLYSIS DEVICE**

(30) Priority: 22.12.2023 JP 2023216559
(71) Applicant: Toray Industries, Inc., Tokyo 103-8666 (JP)
(72) Inventor: KUNITA Tomoyuki, Otsu-shi, Shiga 520-8558 (JP); KATASE Fumiya, Otsu-shi, Shiga 520-8558 (JP); MATSUI Kazuma, Otsu-shi, Shiga 520-8558 (JP); UMEDA Hiroaki, Otsu-shi, Shiga 520-8558 (JP); IZUHARA Daisuke, Otsu-shi, Shiga 520-8558 (JP)
(74) Representative: Hoefer & Partner Patentanwälte mbB
(86) International application number: PCT/JP2024/043992
(87) International publication number: WO 2025/134912

(57) **Abstract**

Provided is a membrane/catalyst layer structure that can maintain a good power generation performance or good electrolysis performance on a long-term basis. The membrane/catalyst layer structure has a first catalyst layer disposed opposite a second catalyst layer, and a diaphragm containing at least a polymer electrolyte membrane is sandwiched therebetween. The first catalyst layer and the second catalyst layer contain, as a first metal, the element platinum and/or the element iridium. The first catalyst layer and/or the second catalyst layer further contains, as a second metal, at least one element selected from the group consisting of gold, silver, copper, nickel, palladium, cobalt, rhodium, iron, ruthenium, and osmium. The diaphragm contains a compound N having a nitrogen-containing heterocycle.

## Description

### TECHNICAL FIELD

The present invention relates to a catalyst coated membrane, a membrane electrode assembly, a fuel cell, a water electrolysis cell, and a water electrolysis device.

### BACKGROUND ART

The fuel cell is a kind of power generator that is designed to extract electric energy by means of electrochemical oxidation of fuels such as hydrogen and methanol, and the fuel cell has now attracted attention as a clean energy supply source. Among others, polymer electrolyte fuel cells, which can work at relatively low operating temperatures and realize high energy density, are expected to serve for a wide variety of applications including power generation devices for movable bodies such as automobiles and ships.

A polymer electrolyte fuel cell is composed mainly of a plurality of cells each incorporating an anode and a cathode that are disposed in such a manner that they face each other and are located on opposite sides of a separator film that contains a polymer electrolyte membrane, and power generation is realized by supplying a fuel (such as hydrogen or methanol) to the anode while supplying an oxidant gas (such as air or oxygen) to the cathode. For such polymer electrolyte type fuel cells, the use of electrolyte membranes that include nitrogen-containing heterocyclic compounds has been proposed as a means for controlling the fuel crossover (for example, see Patent document 1).

Meanwhile, as a solution to environmental problems such as global warming, attention has been focused in recent years on the use of hydrogen as a clean energy source to replace fossil fuels. Hydrogen is now expected to serve effectively as a clean energy source because it basically emits only water when combusted and does not emit carbon dioxide, which is thought to be a cause of global warming. Production of hydrogen is performed mainly through electrolysis of water.

Well-known methods that are used for hydrogen production through the electrolysis of water include alkaline water electrolysis and polymer electrolyte membrane (PEM) type water electrolysis. In particular, the PEM type water electrolysis method has advantages in that it can be operated at high current density and can flexibly respond to output fluctuations of renewable energy.

The PEM type water electrolysis method uses water electrolysis cells each incorporating an anode and a cathode that are disposed in such a manner that they face each other and are located on opposite sides of a separator film containing a polymer electrolyte membrane. Supply of water to the cells causes generation of oxygen at the anode and generation of hydrogen at the cathode.

It is known to be effective to use a fluorine based polymer electrolyte or a hydrocarbon based polymer electrolytes as the polymer electrolyte component incorporated in a polymer electrolyte membrane and to use the iridium element as the anode catalyst and the platinum element as the cathode catalyst (for example, see Patent documents 2 and 3).

### PRIOR ART DOCUMENTS

### PATENT DOCUMENTS

Patent document 1: Published Japanese Translation of PCT International Publication JP 2019-507006
Patent document 2: Japanese Unexamined Patent Publication (Kokai) No. 2023-112816
Patent document 3: Japanese Unexamined Patent Publication (Kokai) No. 2018-159121

### SUMMARY OF INVENTION

### PROBLEMS TO BE SOLVED BY THE INVENTION

In the field of fuel cells, it is required that relatively high power generation performance be maintained over a long period of time. However, the techniques described in the Patent documents listed above have still been insufficient in this point.

On the other hand, in the field of water electrolysis, reduction of hydrogen production cost is required strongly in order to promote the widespread adoption of hydrogen energy. To realize a decrease in hydrogen production cost, it is effective if relatively high electrolysis performance can be maintained over a long period of time in each single water electrolysis cell instead of frequent replacement of those cells. However, the techniques proposed in the Patent documents listed above have still been insufficient in this point.

Thus, in view of the above problems, the main object of the present invention is to provide a catalyst coated membrane that serves to maintain good power generation performance or good electrolysis performance over a long period of time.

### MEANS OF SOLVING THE PROBLEMS

The aforementioned object of the present invention can be achieved by the following aspects of the invention. Specifically, it is as follows.
[1] A catalyst coated membrane comprising at least a first catalyst layer and a second catalyst layer disposed in such a manner that they face each other and are located on opposite sides of a separator film containing a polymer electrolyte membrane, wherein the first catalyst layer and the second catalyst layer each contain, as a first metal, the platinum element and/or the iridium element and the first catalyst layer and/or the second catalyst layer further contain, as a second metal, at least one element selected from the group consisting of gold, silver, copper, nickel, palladium, cobalt, rhodium, iron, ruthenium, and osmium and also wherein the separator film includes a compound N having a nitrogen-containing heterocyclic ring.
[2] A catalyst coated membrane as set forth in the paragraph [1], wherein the compound N having a nitrogen-containing heterocyclic ring has a nitrogen-containing aromatic five-membered ring or a nitrogen-containing aromatic six-membered ring.
[3] A catalyst coated membrane as set forth in either the paragraph [1] or [2], wherein the compound N having a nitrogen-containing heterocyclic ring has a nitrogen-containing aromatic six-membered ring.
[4] A catalyst coated membrane as set forth in any one of the paragraphs [1] to [3], wherein the compound N having a nitrogen-containing heterocyclic ring has a plurality of nitrogen-containing aromatic six-membered rings.
[5] A catalyst coated membrane as set forth in any one of the paragraphs [1] to [4], wherein the compound N having a nitrogen-containing heterocyclic ring is a compound as represented by any general formula selected from the group consisting of (D1), (D2), and (D3). 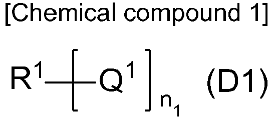
   In the formula, R¹ represents at least one group selected from the group consisting of a divalent or higher-valent hydrocarbon group, an amino group, a sulfide group, a ketone group, a sulfonyl group, a sulfone group, and an ether group and each of the n₁ Q¹ rings independently represents a five-membered or six-membered nitrogen-containing aromatic heterocyclic ring, a condensed ring of such nitrogen-containing aromatic heterocyclic rings, or a condensed ring of such a nitrogen-containing aromatic heterocyclic ring and a hydrocarbon based aromatic ring, wherein these nitrogen-containing aromatic heterocyclic rings and hydrocarbon based aromatic rings may each be substituted by any appropriate substituent. Here, n₁ is an integer of 2 to 10. 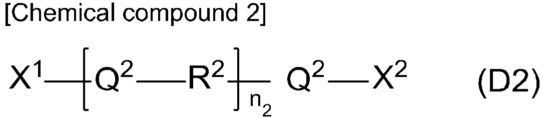
   In the formula, R² represents either at least one group selected from the group consisting of a hydrocarbon group, an amino group, a sulfide group, a ketone group, a sulfonyl group, a sulfone group, and an ether group, or direct bonding while Q² represents a group incorporating one to five of five-membered or six-membered nitrogen-containing aromatic heterocyclic rings, condensed rings of such nitrogen-containing aromatic heterocyclic rings, or condensed rings of such nitrogen-containing aromatic heterocyclic rings and hydrocarbon based aromatic rings, wherein these nitrogen-containing aromatic heterocyclic rings and hydrocarbon based aromatic rings may each be substituted by any appropriate substituent. Here, n₂ is an integer of 1 to 20. X¹ and X² each independently represent at least one group selected from the group consisting of a hydrogen atom, a halogen atom, a hydrocarbon group, an alkoxy group, an aryloxy group, a carboxyl group, a carboxylic acid ester group, a phosphino group, a phosphine oxide group, a phosphonic acid group, a phosphoric acid ester group, a sulfonic acid group, a sulfuric acid ester group, a hydroxyl group, an amino group, a cyano group, and a nitro group. 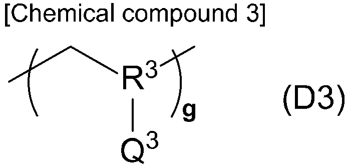
   In the formula, R³ represents either C(R) or a nitrogen atom; R represents a hydrogen atom or an alkyl group; and Q³ represents a five-membered or six-membered nitrogen-containing aromatic heterocyclic ring, a condensed ring of such nitrogen-containing aromatic heterocyclic rings, or a condensed ring of such a nitrogen-containing aromatic heterocyclic ring and a hydrocarbon based aromatic ring, wherein these nitrogen-containing aromatic heterocyclic rings and hydrocarbon based aromatic rings may each be substituted by any appropriate substituent. Here, g is an integer of 5 to 500.
[6] A catalyst coated membrane as set forth in any one of the paragraphs [1] to [5], wherein the first catalyst layer is an oxygen generation catalyst layer that contains the iridium element as the first metal while the second catalyst layer is a proton reduction catalyst layer that contains the platinum element as the first metal.
[7] A catalyst coated membrane as set forth in any one of the paragraphs [1] to [5], wherein the first catalyst layer is an oxygen reduction catalyst layer that contains the platinum element as the first metal while the second catalyst layer is a hydrogen oxidation catalyst layer that contains the platinum element as the first metal.
[8] A catalyst coated membrane as set forth in the paragraph [6], wherein the second catalyst layer contains the ruthenium element as the second metal.
[9] A catalyst coated membrane as set forth in either the paragraph [6] or [8], wherein the second catalyst layer contains carbon particles supporting the platinum element or carbon particles supporting the platinum element and the ruthenium element.
[10] A catalyst coated membrane as set forth in either the paragraph [8] or [9], wherein the second catalyst layer contains carbon particles supporting a platinum-ruthenium alloy.
[11] A catalyst coated membrane as set forth in any one of the paragraphs [1], [6], and [8] to [10], wherein the first catalyst layer contains the iridium element as the first metal, the iridium element being in the form of iridium oxide.
[12] A catalyst coated membrane as set forth in any one of the paragraphs [1] to [11], wherein the first catalyst layer and the second catalyst layer each further contain a polymer electrolyte.
[13] A catalyst coated membrane as set forth in any one of the paragraphs [1], [6], and [8] to [12], wherein the first catalyst layer contains the iridium element as the first metal and a polymer electrolyte, with the ratio (Ya) of the mass of the polymer electrolyte to the mass of the iridium element being 0.05 or more and less than 0.5 and also wherein the second catalyst layer contains the platinum element as the first metal, the ruthenium element as the second metal, and a polymer electrolyte, with the ratio (Yc) of the mass of the polymer electrolyte to the total mass of the platinum element and the ruthenium element being 0.25 or more and 1.1 or less.
[14] A catalyst coated membrane as set forth in the paragraph [13], wherein the ratio (Ya) is smaller than the ratio (Yc).
[15] A catalyst coated membrane as set forth in any one of the paragraphs [1] to [14], wherein the thickness of the first catalyst layer and/or the thickness of the second catalyst layer each account for 25% or less relative to the thickness of the separator film, which accounts for 100%.
[16] A catalyst coated membrane as set forth in any one of the paragraphs [1] to [15], wherein the polymer electrolyte membrane contains a hydrocarbon based polymer electrolyte.
[17] A catalyst coated membrane as set forth in either the paragraph [1] or [7], wherein the first catalyst layer is the anode catalyst layer while the second catalyst layer is the cathode catalyst layer.
[18] A fuel cell comprising a catalyst coated membrane as set forth in any one of the paragraphs [1] to [17].
[19] A water electrolysis device comprising a catalyst coated membrane as set forth in any one of the paragraphs [1] to [17].
[20] A membrane electrode assembly comprising a catalyst coated membrane as set forth in any one of the paragraphs [1] to [17] and electrode bases located on opposite sides thereof.
[21] A fuel cell comprising a membrane electrode assembly as set forth in the paragraph [20].
[22] A water electrolysis cell comprising a membrane electrode assembly as set forth in the paragraph [20].
[23] A water electrolysis device comprising a water electrolysis cell as set forth in the paragraph [22].

### ADVANTAGEOUS EFFECTS OF THE INVENTION

The catalyst coated membrane according to the present invention serves to allow good electrolysis performance to be maintained over a long period of time in a fuel cell, and also allow good electrolysis performance to be maintained over a long period of time in a water electrolysis device.

### BRIEF DESCRIPTION OF THE DRAWINGS

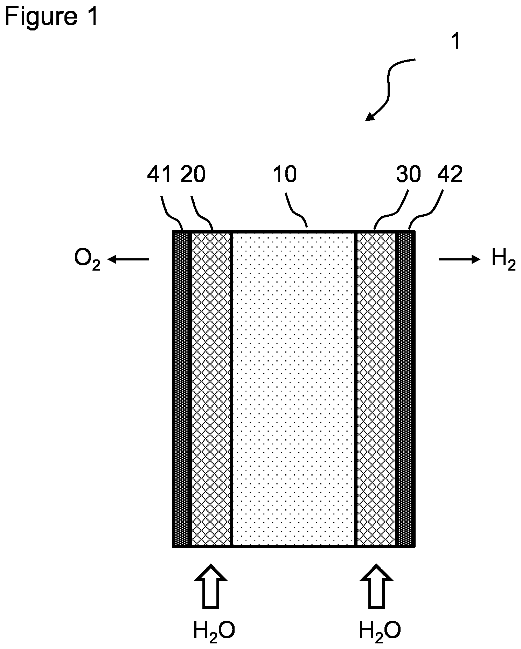

[Fig. 1] This is a schematic diagram of a cross section of a typical water electrolysis cell according to the present invention.

### DESCRIPTION OF PREFERRED EMBODIMENTS

Some embodiments according to the present invention will be described in more detail below, but it should be noted that the present invention is not limited to the embodiments described below and they may be modified appropriately to suit particular objectives and purposes.

The catalyst coated membrane according to an embodiment according to the present invention adopts a configuration in which a first catalyst layer and a second catalyst layer are disposed facing each other and located on opposite sides of a separator film containing a polymer electrolyte membrane to sandwich them. If, in addition, the separator film includes a compound N having a nitrogen-containing heterocyclic ring (hereinafter occasionally referred to simply as compound N) and at the same time the first catalyst layer and the second catalyst layer each contain a metal as listed below, this combination makes it possible to maintain good power generation performance or good electrolysis performance over a long period of time.

Specifically, the first catalyst layer and the second catalyst layer each contain, as a first metal, the platinum element and/or the iridium element and the first catalyst layer and/or the second catalyst layer each further contain, as a second metal, at least one element selected from the group consisting of gold, silver, copper, nickel, palladium, cobalt, rhodium, iron, ruthenium, and osmium.

### [Separator film]

The separator film includes at least a polymer electrolyte membrane. A polymer electrolyte film includes a polymer electrolyte. The separator film may be formed only of a polymer electrolyte membrane or may have a layered structure composed of a polymer electrolyte membrane and other layers. Such other layers will be described in detail later. In the case where the separator film has a layered structure composed of a polymer electrolyte membrane and other layers, the compound N may be present in any one or more of the layers that constitute the separator film. For the present invention, it is preferable that that the compound N be present at least in the polymer electrolyte membrane.

From the viewpoint of maintaining good power generation performance or electrolysis performance over a long period of time, it is preferable that the content of the compound N in the separator film be 0.01 part by mass or more, more preferably 0.05 part by mass or more, still more preferably 0.1 part by mass or more, and particularly preferably 0.2 part by mass or more, relative to 100 parts by mass of the polymer electrolyte contained in the separator film. On the other hand, the content is preferably 10 parts by mass or less, more preferably 5 parts by mass or less, still more preferably 3 parts by mass or less, and particularly preferably 1 part by mass or less.

From the viewpoint of maintaining good power generation performance of a fuel cell over a long period of time, it is preferable that the thickness of the separator film be 2 µm or more, more preferably 3 µm or more, and particularly preferably 4 µm or more. The thickness is preferably 30 µm or less, more preferably 20 µm or less, and particularly preferably 15 µm or less.

On the other hand, from the viewpoint of maintaining good electrolysis performance of water electrolysis device over a long period of time, it is preferable that the thickness of the separator film be 20 µm or more, more preferably 30 µm or more, still more preferably 40 µm or more, and particularly preferably 50 µm or more. The thickness is preferably 250 µm or less, more preferably 200 µm or less, still more preferably 180 µm or less, and particularly preferably 150 µm or less.

### [Compound N]

Preferred examples of the nitrogen-containing heterocyclic ring present in a compound N include nitrogen-containing aromatic heterocyclic rings and nitrogen-containing aliphatic heterocyclic rings. Among these, nitrogen-containing aromatic heterocyclic rings are more preferred.

Good nitrogen-containing aromatic heterocyclic rings include, for example, the pyridine ring, pyridazine ring, pyrimidine ring, pyrazine ring, triazine ring, pyrrole ring, pyrazole ring, imidazole ring, triazole ring, tetrazole ring, oxazole ring, oxadiazole ring, thiazole ring, thiadiazole ring, and selenazole ring. The nitrogen-containing aromatic heterocyclic ring to adopt may be one formed through condensation of the above heterocyclic rings, such as imidazopyridine and imidazopyrimidine, or may be one formed through condensation of a nitrogen-containing aromatic heterocyclic ring and a hydrocarbon based aromatic ring, such as benzimidazole, benzoxazole, benzothiazole, quinoline, quinoxaline, and phenanthroline. Preferred examples of the hydrocarbon based aromatic rings include the benzene ring, naphthalene ring, anthracene ring, and phenanthrene ring, of which the benzene ring is more preferred.

Among these nitrogen-containing aromatic heterocyclic rings, preferred ones include nitrogen-containing aromatic five-membered rings and nitrogen-containing aromatic six-membered rings, of which nitrogen-containing aromatic six-membered rings are more preferred. It is more preferable that these nitrogen-containing aromatic five-membered rings and nitrogen-containing aromatic six-membered rings be in the form of being condensed with hydrocarbon based aromatic rings (such as benzene ring, naphthalene ring, anthracene ring, and phenanthrene ring). It is still more preferable to adopt a ring formed through condensation of a nitrogen-containing aromatic six-membered ring and a hydrocarbon based aromatic ring. It is particularly preferable to adopt a ring formed through condensation of two nitrogen-containing aromatic six-membered rings and one hydrocarbon based aromatic ring. The number of nitrogen-containing aromatic six-membered rings present in the compound N is preferably 2 or more, more preferably 3 or more, and particularly preferably 4 or more.

The number of nitrogen-containing heterocyclic rings present in the compound N is preferably 2 or more, more preferably 3 or more, and particularly preferably 4 or more. On the other hand, their number is preferably 1,000 or less, more preferably 800 or less, and particularly preferably 500 or less. The compound N may be either a non-polymeric (low molecular weight) one or a polymeric (high molecular weight) one. When the compound N is a non-polymeric one, the number of nitrogen-containing heterocyclic rings is preferably less than 30, more preferably 20 or less, and particularly preferably 15 or less. When the compound N is a polymeric one, the number of nitrogen-containing heterocyclic rings is preferably 30 or more, more preferably 40 or more, and particularly preferably 50 or more.

For a water electrolysis process, it is preferable, from the viewpoint of maintaining good electrolysis performance for a longer period of time, that the compound N be one that is less likely to be eluted from the separator film during water electrolysis operation. From this point of view, the compound N to use for a water electrolysis process preferably has a relatively large molecular weight. Specifically, it is preferably 200 or more, more preferably 300 or more, and particularly preferably 400 or more. In addition, it is preferable for the compound N to be easily mixed with the polymer electrolyte during the separator film production process, and from this point of view, it is preferable for the compound N to have a molecular weight of 200,000 or less, more preferably 150,000 or less, and particularly preferably 100,000 or less. Here, in the case where the compound N is a polymeric one, the aforementioned molecular weight refers to its number average molecular weight.

It is preferable for the compound N to be a compound as represented by the general formula (D1), (D2), or (D3) given below.

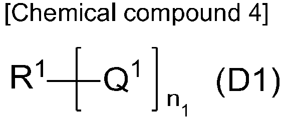

R¹ represents at least one group selected from the group consisting of a divalent or higher-valent hydrocarbon group, an amino group, a sulfide group, a ketone group, a sulfonyl group, a sulfone group, and an ether group and each of the n₁ Q¹ rings independently represents a five-membered or six-membered nitrogen-containing aromatic heterocyclic ring, a condensed ring of such nitrogen-containing aromatic heterocyclic rings, or a condensed ring of such a nitrogen-containing aromatic heterocyclic ring and a hydrocarbon based aromatic ring, wherein these nitrogen-containing aromatic heterocyclic rings and hydrocarbon based aromatic rings may each be substituted by any appropriate substituent. Here, n₁ is an integer of 2 to 10.

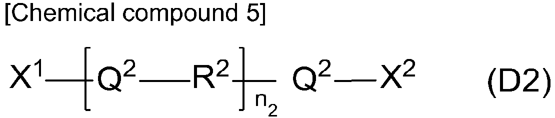

R² represents either at least one group selected from the group consisting of a hydrocarbon group, an amino group, a sulfide group, a ketone group, a sulfonyl group, a sulfone group, and an ether group, or direct bonding while Q² represents a group incorporating one to five of five-membered or six-membered nitrogen-containing aromatic heterocyclic rings, condensed rings of these nitrogen-containing aromatic heterocyclic rings, or condensed rings of these nitrogen-containing aromatic heterocyclic rings and hydrocarbon based aromatic rings, wherein these nitrogen-containing aromatic heterocyclic rings and hydrocarbon based aromatic rings are bonded to each other and may each be substituted by any appropriate substituent. Here, n₂ is an integer of 1 to 20. X¹ and X² each independently represent at least one group selected from the group consisting of a hydrogen atom, a halogen atom, a hydrocarbon group, an alkoxy group, an aryloxy group, a carboxyl group, a carboxylic acid ester group, a phosphino group, a phosphine oxide group, a phosphonic acid group, a phosphoric acid ester group, a sulfonic acid group, a sulfuric acid ester group, a hydroxyl group, an amino group, a cyano group, and a nitro group.

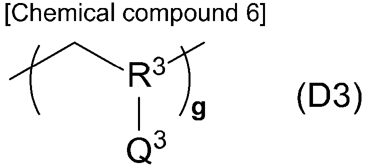

R³ represents either C(R) or a nitrogen atom; R represents a hydrogen atom or an alkyl group; Q³ represents a five-membered or six-membered nitrogen-containing aromatic heterocyclic ring, a condensed ring of such nitrogen-containing aromatic heterocyclic rings, or a condensed ring of such a nitrogen-containing aromatic heterocyclic ring and a hydrocarbon based aromatic ring, wherein these nitrogen-containing aromatic heterocyclic rings and hydrocarbon based aromatic rings may each be substituted by any appropriate substituent. Here, g is an integer of 5 to 500.

For the above general formulae (D1) and (D2), the term "amino group" refers to a primary to tertiary amino group or a quaternary ammonium cation. In addition, an i- or higher-valent (i = 1-3) bonding site refers to one having i or more moieties that can be bonded to other constituent units.

Furthermore, typical hydrocarbon groups that are represented by R¹, R², X¹, or X² include, for example, linear, cyclic, or branched hydrocarbon groups represented by the general formula CₘHₙ (where m and n are integers, and m is preferably 1 to 20). Each of these hydrocarbon group may be either an aliphatic hydrocarbon group or an aromatic hydrocarbon group, but it is preferably an aromatic hydrocarbon group. These hydrocarbon groups may be substituted by any appropriate substituent.

In all of the above descriptions of groups, there are no particular limitations on "the appropriate substituent", but preferred examples thereof include halogen atoms, alkyl groups, alkoxy groups, aryl groups, aryloxy groups, carboxyl groups, carboxylic acid ester groups, phosphino groups, phosphine oxide groups, phosphonic acid groups, phosphoric acid ester groups, sulfonic acid groups, sulfuric acid ester groups, hydroxyl group, amino groups, cyano groups, and nitro groups.

Examples of compounds that are represented by the above general formula (D1) are shown below, but the compounds are not limited to these.

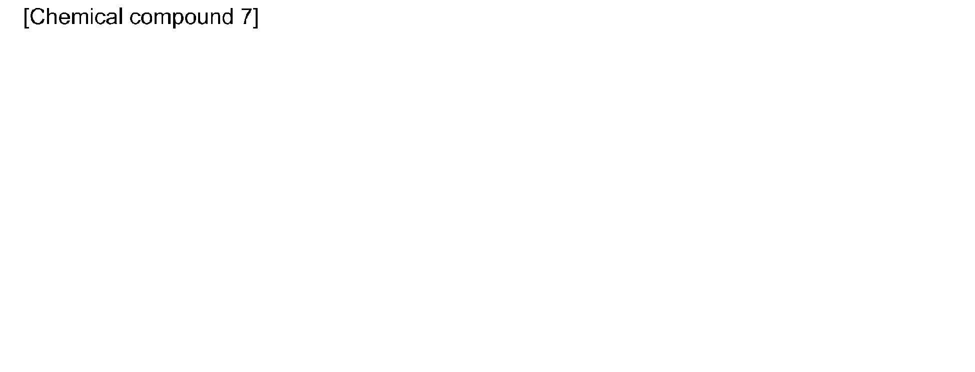

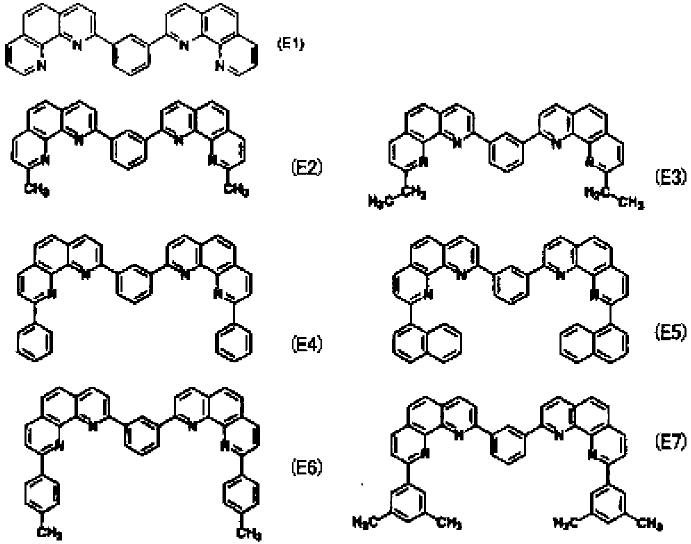

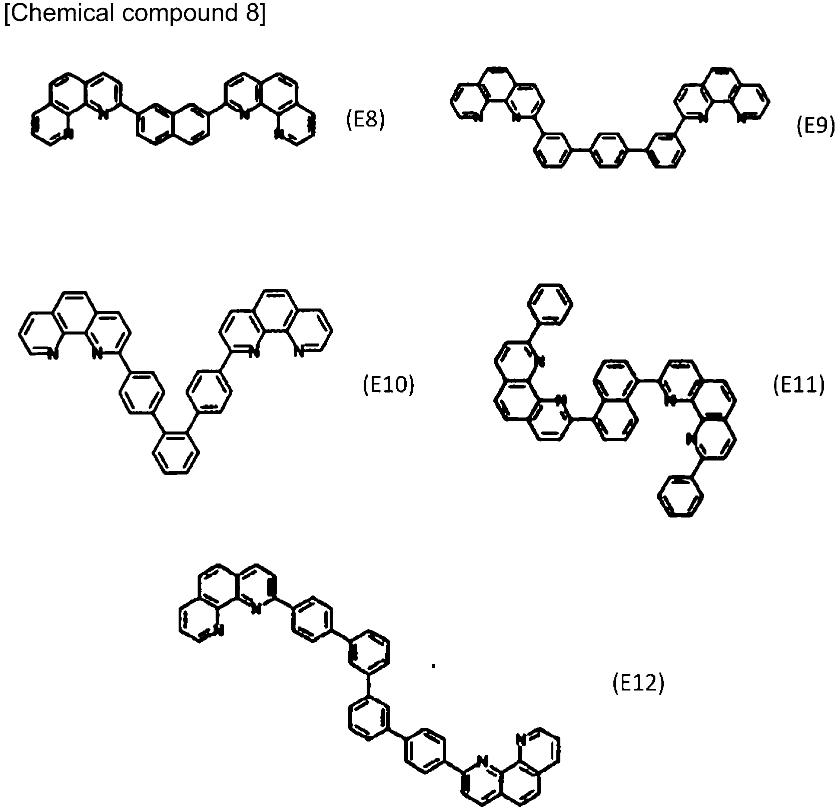

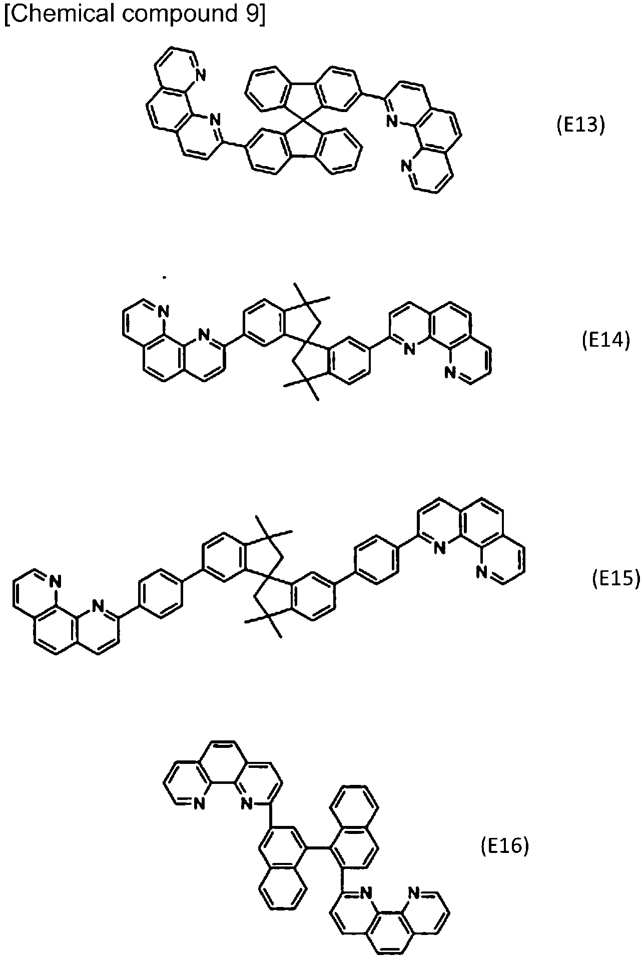

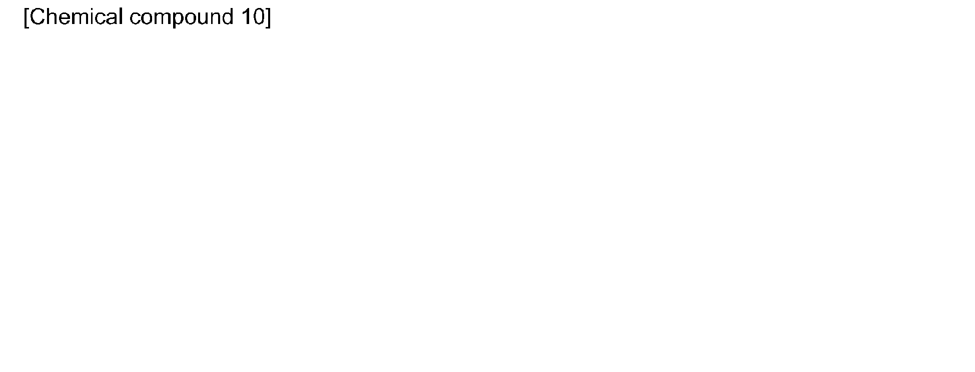

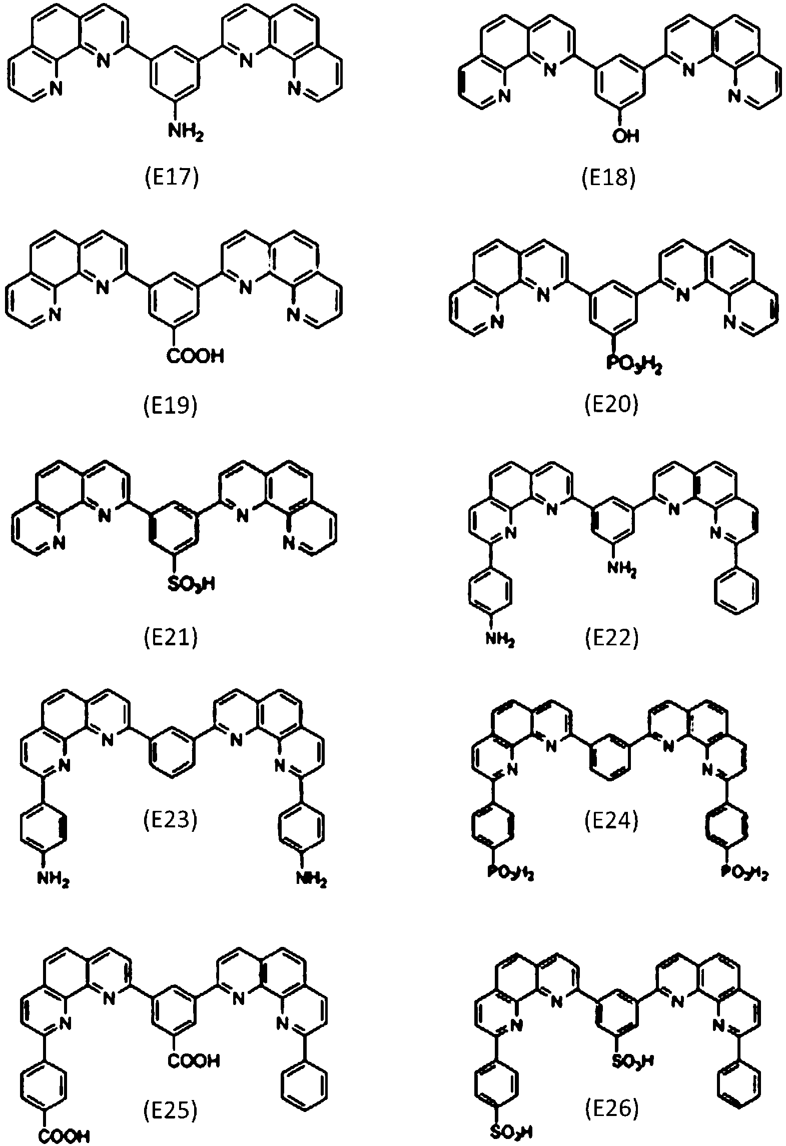

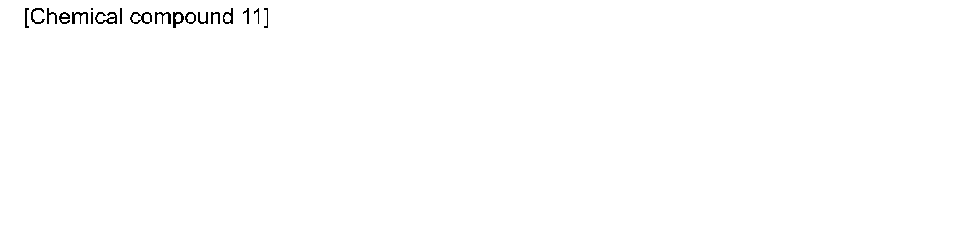

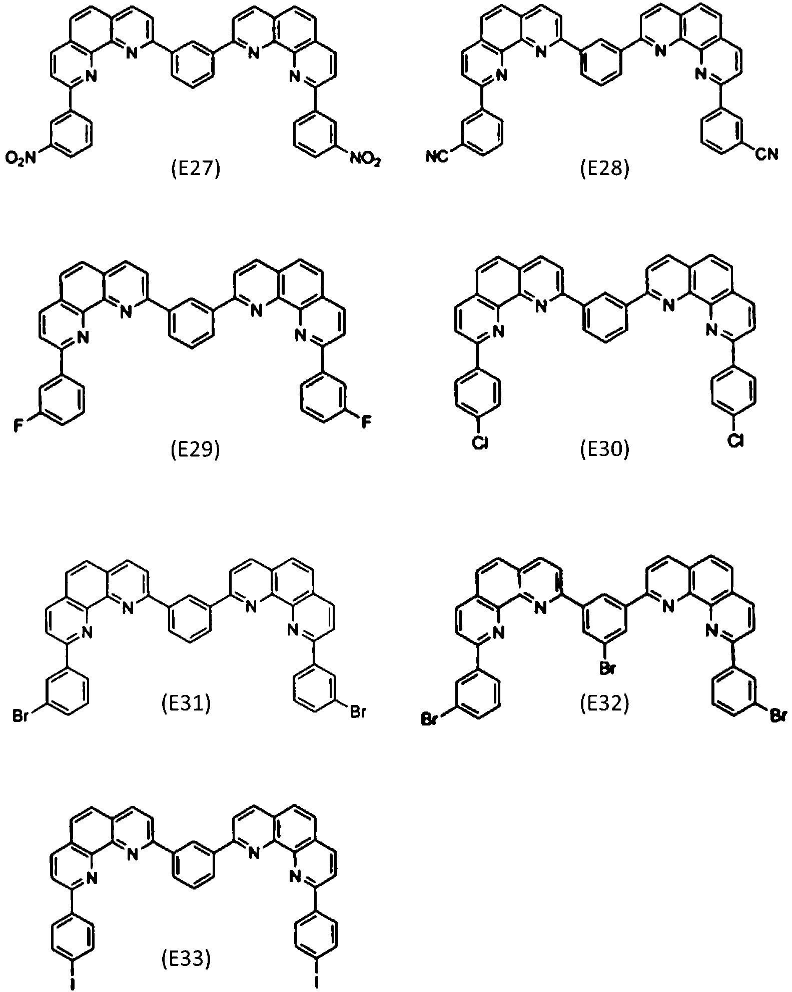

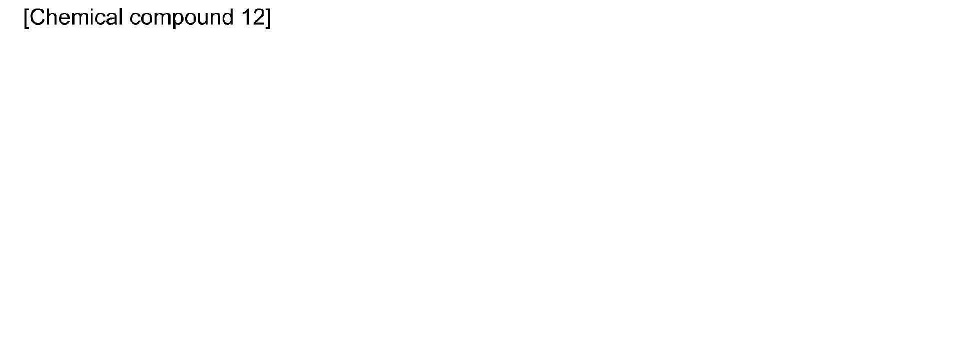

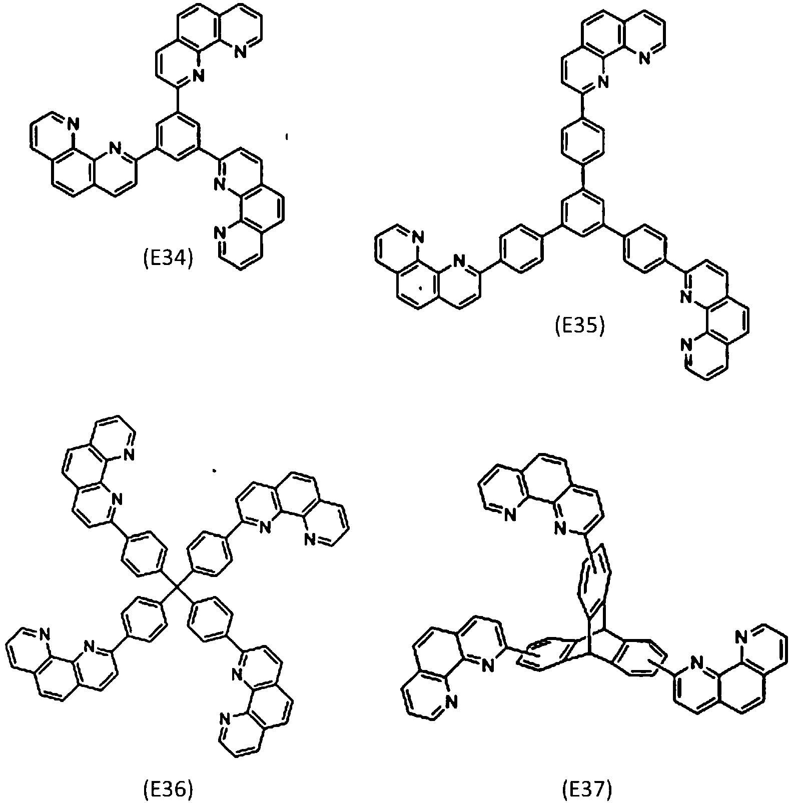

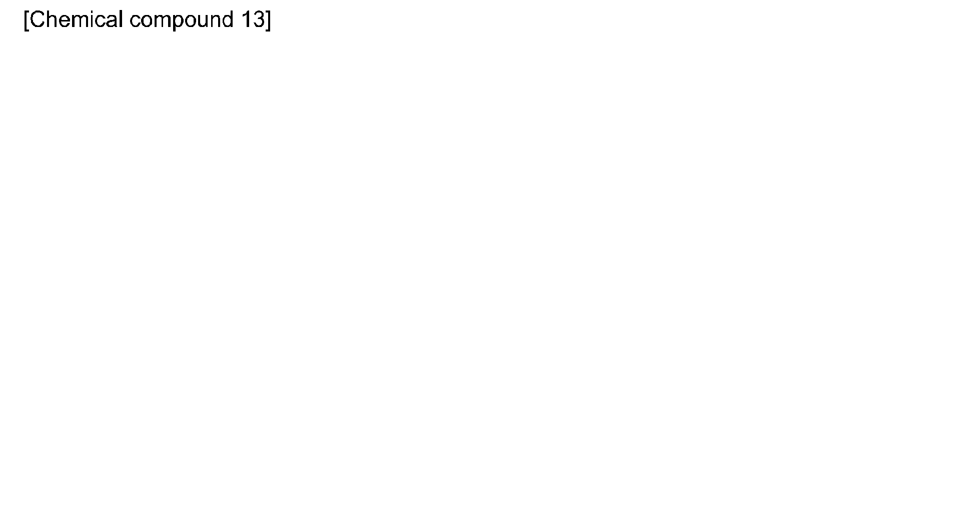

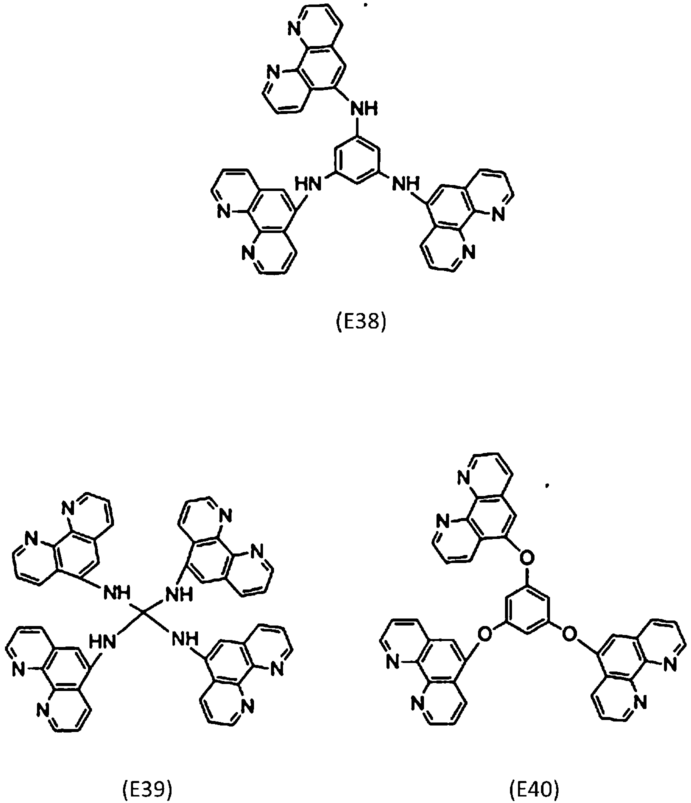

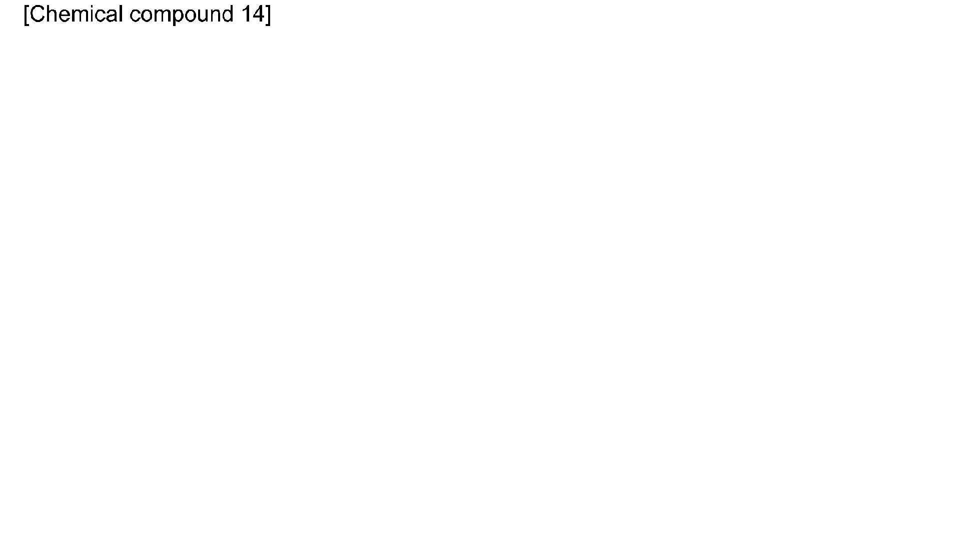

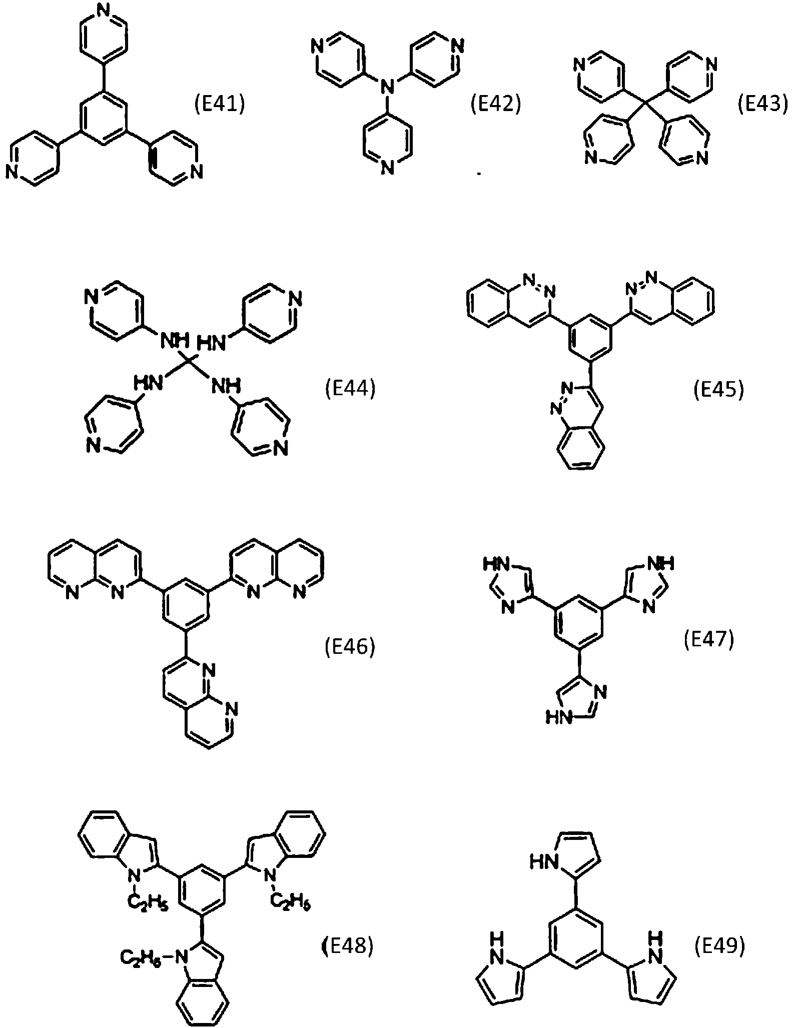

Among the compounds that are represented by the above general formula (D1), those compounds that have six-membered nitrogen-containing aromatic rings are preferable, and those compounds that are represented by the general formula (D1a) given below are more preferable.

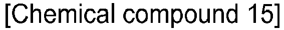

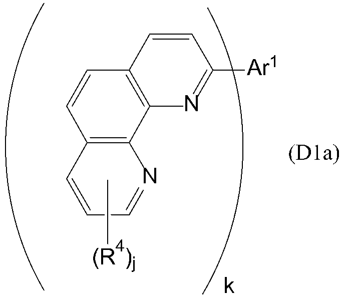

In the general formula (D1a), Ar¹ represents a k-valent arylene group, and each R⁴ independently represents at least one group selected from the group consisting of halogen atoms, alkyl groups having 1 to 20 carbon atoms, alkoxy groups having 1 to 20 carbon atoms, aryl groups having 6 to 20 carbon atoms, aryloxy groups having 6 to 20 carbon atoms, carboxyl groups, carboxylic acid ester groups, phosphino groups, phosphine oxide groups, phosphonic acid groups, phosphoric acid ester groups, sulfonic acid groups, sulfuric acid ester groups, hydroxyl groups, amino groups, cyano groups, and nitro groups. Furthermore, j is an integer of 0 or more and 7 or less and k is an integer of 2 or more.

Next, examples of compounds that are represented by the general formula (D2) given above are shown below, but the compounds are not limited to these.

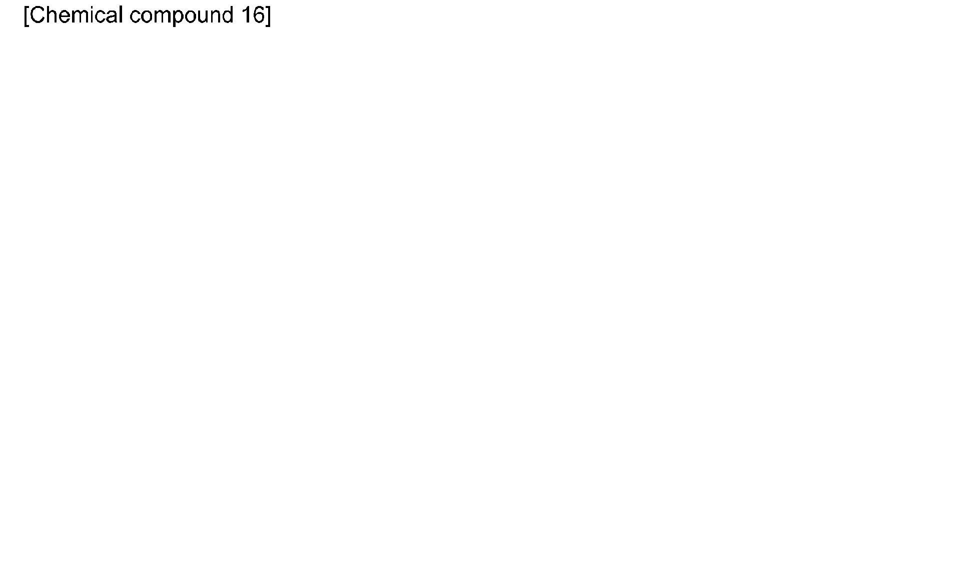

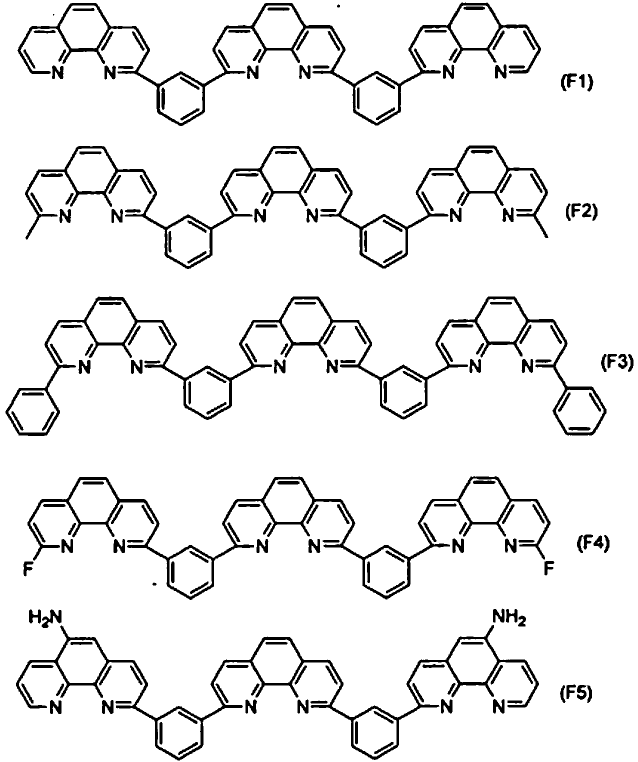

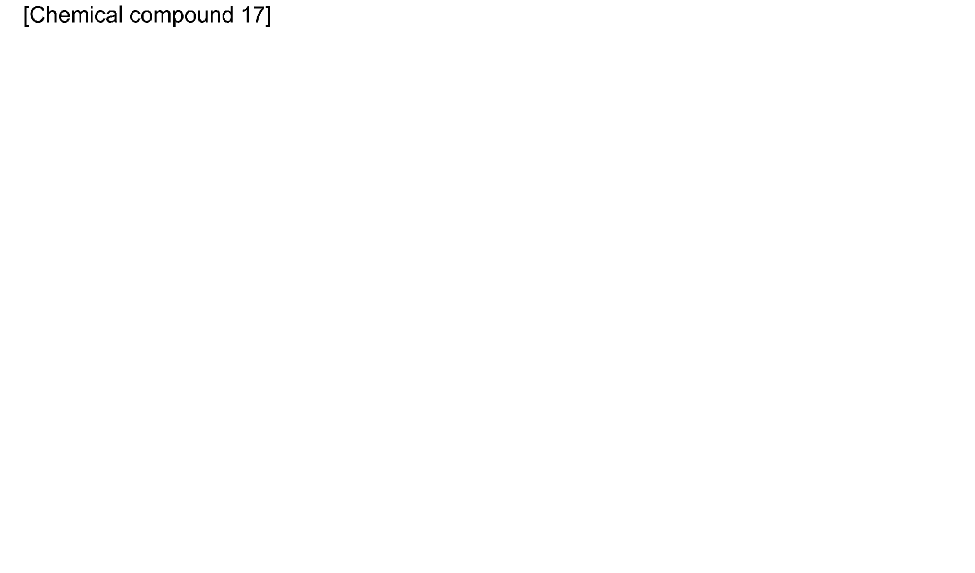

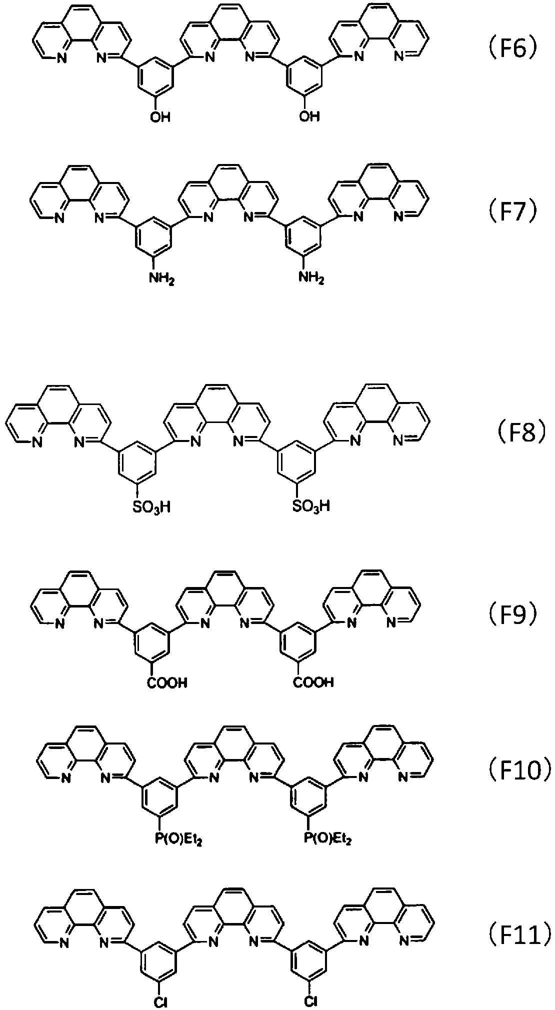

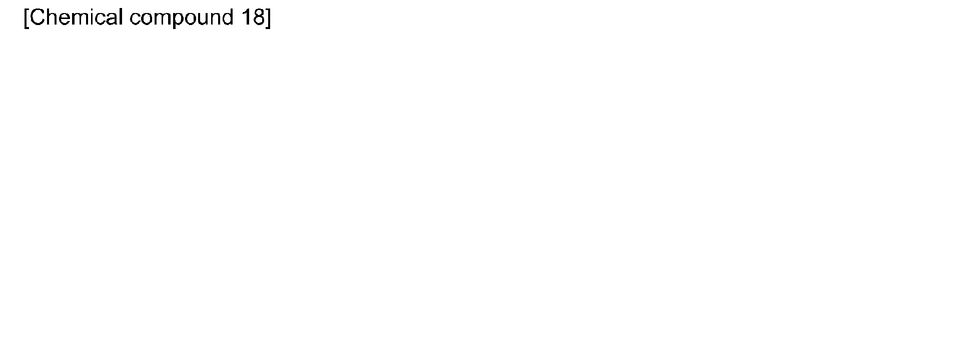

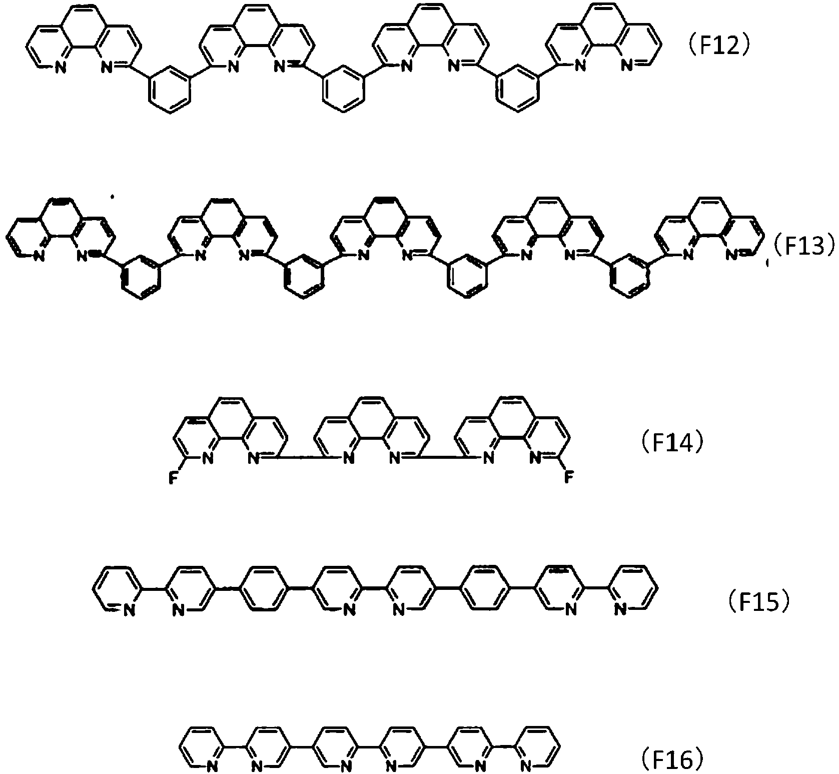

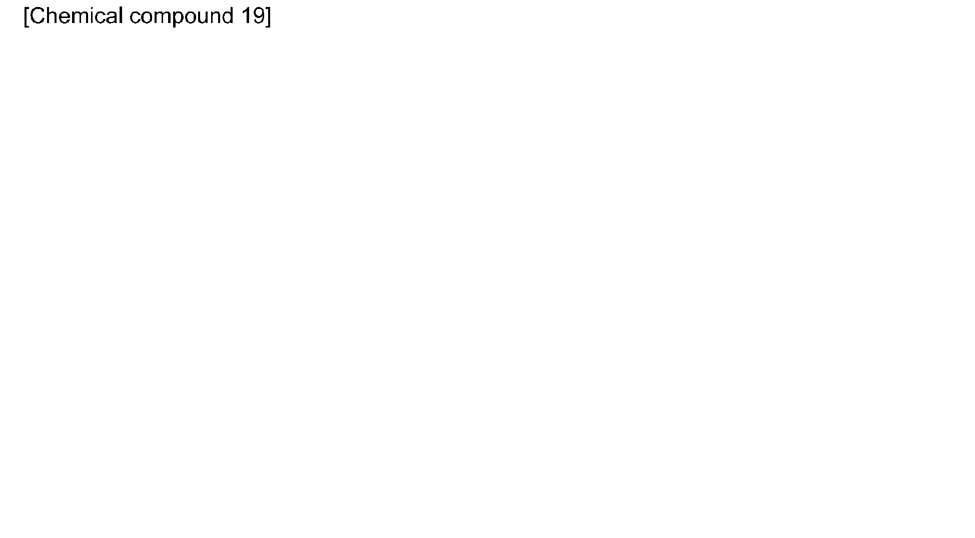

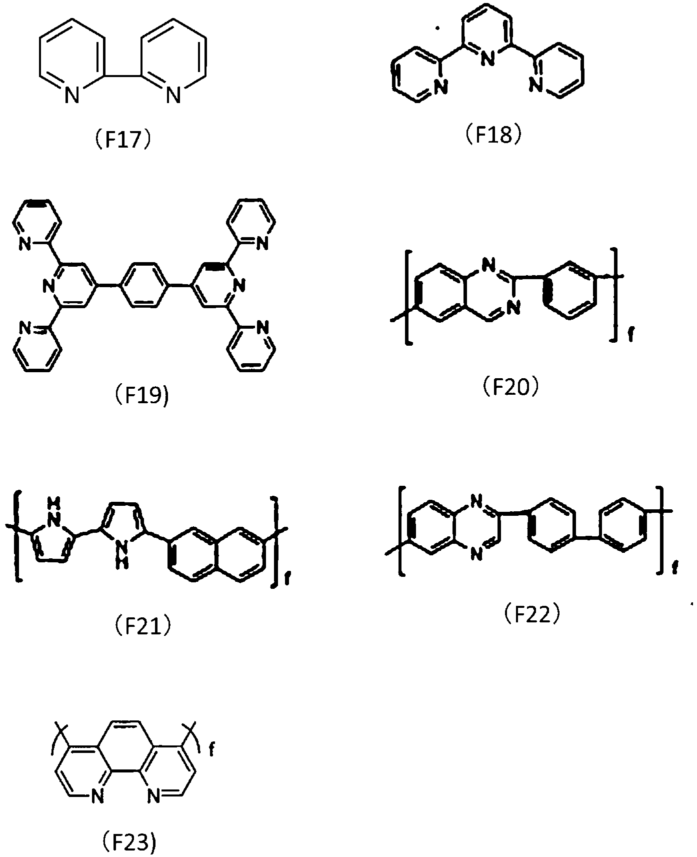

Among the compounds that are represented by the general formula (D2) given above, those compounds that have six-membered nitrogen-containing aromatic rings are preferable, and those compounds that are represented by the general formula (D2a) given below are more preferable.

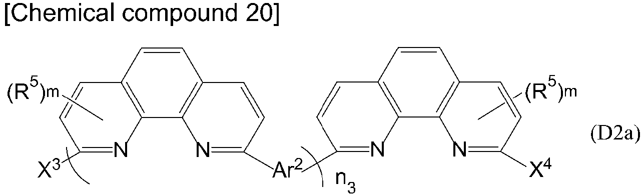

In the general formula (D2a), Ar² represents an arylene group, and each R⁵ independently represents at least one group selected from the group consisting of halogen atoms, alkyl groups having 1 to 20 carbon atoms, alkoxy groups having 1 to 20 carbon atoms, aryl groups having 6 to 20 carbon atoms, aryloxy groups having 6 to 20 carbon atoms, carboxyl groups, carboxylic acid ester groups, phosphino groups, phosphine oxide groups, phosphonic acid groups, phosphoric acid ester groups, sulfonic acid groups, sulfuric acid ester groups, hydroxyl group, amino groups, cyano groups, and nitro groups. X³ and X⁴ each independently represents at least one group selected from the group consisting of hydrogen atom, halogen atoms, alkyl groups having 1 to 20 carbon atoms, alkoxy groups having 1 to 20 carbon atoms, aryl groups having 6 to 20 carbon atoms, aryloxy groups having 6 to 20 carbon atoms, carboxyl groups, carboxylic acid ester groups, phosphino groups, phosphine oxide groups, phosphonic acid groups, phosphoric acid ester groups, sulfonic acid groups, sulfuric acid ester groups, hydroxyl group, amino groups, cyano groups, and nitro groups. Furthermore, m is an integer of 0 or more and 6 or less and n₃ is an integer of 2 or more and 4 or less. Next, examples of compounds that are represented by the general formula (D3) given above are shown below, but the compounds are not limited to these.

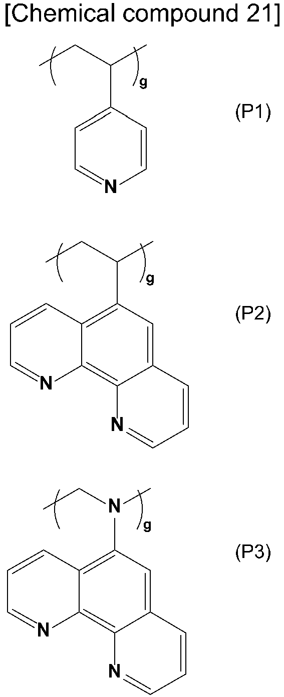

As long as having a nitrogen-containing heterocyclic ring, the compound N may be suitably used even if it is a compound that is not represented by any of the general formulae (D1), (D2), and (D3). Examples of such compounds are shown below, but the compounds are not limited to these.
(H1) 1,10-phenanthroline
(H2) 5-amino-1,10-phenanthroline
(H3) polybenzimidazole (PBI)

The term "polybenzimidazole (PBI)" refers collectively to all compounds that have a benzimidazole structure in the main chain. As PBI, it is suitable to use a compound as represented by the general formula (H3) given below.

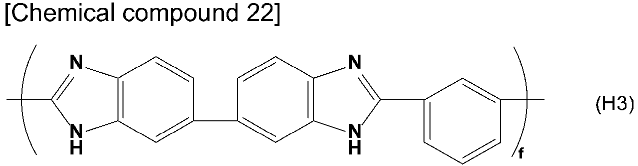

For the compound N, furthermore, a macrocyclic compound can be suitably used as a compound that is not represented by any of the general formulae (D1), (D2), and (D3). Useful macrocyclic compounds include those having a choline skeleton, porphyrin skeleton, or phthalocyanine skeleton, and those having an azacalixarene skeleton. Specific examples include choline, porphyrin, protoporphyrin, phthalocyanine, corrole, chlorin, bacteriochlorin, coproporphyrinogen I, coproporphyrinogen III, uroporphyrinogen I, uroporphyrinogen III, protoporphyrinogen IX, and azacalixarene, though the compounds are not limited thereto. Among these, choline, porphyrin, phthalocyanine, and azacalixarene are preferable, of which porphyrin and phthalocyanine are more preferable.

### [Polymer electrolyte membrane]

The polymer electrolyte membrane contains a polymer electrolyte as described above. For the present invention, the term "polymer electrolyte membrane" refers to a membrane in which polymer electrolytes account for 50 mass% or more of the total solid content, which accounts for 100 mass%, in the polymer electrolyte membrane. The content of the polymer electrolytes is preferably 60 mass% or more, more preferably 70 mass% or more, still more preferably 80 mass% or more, and particularly preferably 90 mass% or more.

Examples of preferred polymer electrolytes for the present invention include fluorine based polymer electrolytes and hydrocarbon based polymer electrolytes. For the present invention, it is preferable for the polymer electrolyte membrane to contain a hydrocarbon based polymer electrolyte.

Preferred examples of such fluorine based polymer electrolytes include those fluorine based polymers that contain an ionic group. The term "fluorine based polymer" refers to a polymer in which most of or all of the hydrogen atoms present in the alkyl groups and/or the alkylene groups in the molecule are substituted by fluorine atoms.

Preferred examples of such fluorine based polymer electrolytes include perfluorocarbon sulfonic acid based polymers, perfluorocarbon phosphonic acid based polymers, trifluorostyrene sulfonic acid based polymers, trifluorostyrene phosphonic acid based polymers, ethylene-tetrafluoroethylene-g-styrene sulfonic acid based polymers, ethylene-tetrafluoroethylene copolymers, and polyvinylidene fluoride-perfluorocarbon sulfonic acid based polymers.

Among these, perfluorocarbon sulfonic acid based polymers are preferable from the viewpoint of heat resistance and chemical stability, and examples of such polymers include commercially available products such as Nafion (registered trademark) (manufactured by Chemours Company), Flemion (registered trademark) (manufactured by AGC Inc.), and Aciplex (registered trademark) (manufactured by Asahi Kasei Corporation).

Preferred examples of such hydrocarbon based polymer electrolytes include those hydrocarbon based polymers that contain an ionic group. The term "hydrocarbon based polymer" refers to a polymer that has a main chain containing hydrocarbon units as the primary component. It is preferable that the hydrocarbon based polymers mentioned above be aromatic hydrocarbon based polymers that have an aromatic ring in the main chain. This means that among the various hydrocarbon based polymer electrolytes, it is preferable to adopt an aromatic hydrocarbon based polymer electrolyte.

Among the various aromatic hydrocarbon based polymers, it is preferable to adopt a polymer having a main chain that contains, along with an aromatic ring, a structure selected from the group consisting of polysulfone, polyethersulfone, polyphenylene oxide, polyarylene ether, polyphenylene sulfide, polyphenylene sulfide sulfone, polyparaphenylene, polyarylene based polymer, polyarylene ketone, polyether ketone, polyarylenephosphine oxide, polyether phosphine oxide, polybenzoxazole, polybenzothiazole, polybenzimidazole, polyamide, polyimide, polyether imide, and polyimide sulfone.

Here, the term "polysulfone" mentioned above refers collectively to structures having a sulfone bond in the molecular chain, and the term "polyethersulfone" mentioned above refers collectively to structures having an ether bond and a sulfone bond in the molecular chain. The term "polyether ketone" mentioned above refers collectively to structures having an ether bond and a ketone bond in the molecular chain. The aromatic hydrocarbon based polymers may have two or more of these structures.

Among the various aromatic hydrocarbon based polymers, it is particularly preferable to adopt a polyether ketone based polymer. Preferred examples of the polyether ketone based polymer include polyether ketone, polyether ketone ketone, polyether ether ketone, polyether ether ketone ketone, and polyether ketone ether ketone ketone.

Furthermore, it is preferable the aromatic hydrocarbon based polymer to use be a block copolymer. Here, the term "block copolymer" refers to a block copolymer that incorporates a segment containing a constituent unit having an ionic group and a segment containing constituent unit having no ionic group.

The ionic group may be any ionic group as long as it has either cation exchange capability or anion exchange capability, but for the present invention, it is preferable to use a proton exchangeable ionic group. Examples of such functional groups include the sulfonic acid group, sulfonimide group, sulfuric acid group, phosphonic acid group, phosphoric acid group, carboxylic acid group, ammonium groups, phosphonium groups, and amino groups. Two or more ionic groups may be incorporated in a polymer. It is preferable to use a sulfonic acid group, a sulfonimide group, or a sulfuric acid group because they exhibit good water electrolysis performance, and the use of a sulfonic acid group is more preferable from the viewpoint of raw material cost.

As described above, it is preferable to use an aromatic hydrocarbon based block copolymer as the polymer electrolyte, and it is more preferable to use a polyether ketone based block copolymer. It is particularly preferable to use a polyether ketone based block copolymer that incorporates both a segment including an ionic group-containing constituent unit (S1) and a segment including an ionic group-free constituent unit (S2) as given below.

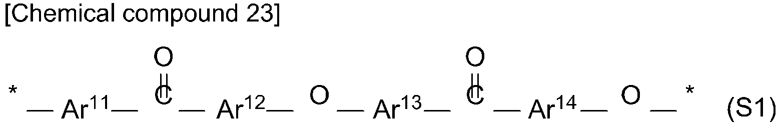

In the general formula (S1), Ar¹¹ to Ar¹⁴ each denote an optionally selected divalent arylene group. Here, Ar¹¹ and/or Ar¹² contain an ionic group while Ar¹³ and Ar¹⁴ may or may not contain an ionic group. Ar¹¹ to Ar¹⁴ may be optionally substituted or may each independently contain two or more arylene groups. The symbol "*" denotes a bonding site to a constituent unit as represented by the general formula (S1) or to other constituent units.

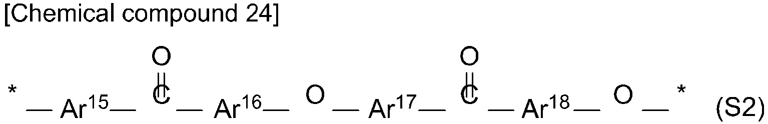

In the general formula (S2), Ar¹⁵ to Ar¹⁸ each represent an optionally selected divalent arylene group, which may be optionally substituted, but has no ionic group. Ar¹⁵ to Ar¹⁸ may each independently contain two or more arylene groups. The symbol "*" denotes a bonding site to a constituent unit as represented by the general formula (S2) or to other constituent units.

Here, preferred divalent arylene groups to use as Ar¹¹ to Ar¹⁸ include, but not limited to, hydrocarbon based arylene groups such as phenylene group, naphthylene group, biphenylene group, and fluorenediyl group, as well as heteroarylene groups such as pyridinediyl, quinoxalinediyl, and thiophenediyl. Here, there are three types of phenylene group, namely, o-phenylene group, m-phenylene group, and p-phenylene group, depending on the position of the bonding site to connect the benzene ring to another constituent unit, but for the present Description, the term "phenylene group" is used to refer collectively to these groups unless otherwise specified. The same applies to other divalent arylene groups such as naphthylene group and biphenylene group. Preferred examples of Ar¹¹ to Ar¹⁴ include phenylene group and phenylene group having an ionic group, and more preferable examples include p-phenylene group and p-phenylene group having an ionic group. On the other hand, Ar¹⁵ to Ar¹⁸ may each be substituted by a group that is not ionic, but they are preferably non-substituted from the viewpoint of proton conductivity, chemical stability, and physical durability.

The ion exchange capacity (IEC) of the polymer electrolyte is preferably 0.5 meq/g or more and 3.5 meq/g or less. In the case of using a hydrocarbon based polymer electrolyte, its IEC is more preferably 1.0 meq/g or more and 3.5 meq/g or less, still more preferably 1.4 meq/g or more and 3.0 meq/g or less, and particularly preferably 1.6 meq/g or more and 2.7 meq/g or less, from the viewpoint of realizing good electrolysis performance and good power generation performance. In the case of using a fluorine based polymer electrolyte, its IEC is more preferably 0.5 meq/g or more and 2.0 meq/g or less, still more preferably 0.7 meq/g or more and 1.7 meq/g or less, and particularly preferably 0.8 meq/g or more and 1.5 meq/g or less.

Here, the IEC is the molar quantity of ionic groups introduced per unit dry weight of the polymer electrolyte P, and a larger IEC value indicates a larger quantity of ionic groups introduced. For the present invention, the IEC is defined as the value determined by the neutralization titration method.

In order to realize good electrolysis performance and good power generation performance, it is preferable for the polymer electrolyte forming the polymer electrolyte membrane to have an IEC value of 1.6 meq/g or more, more preferably 1.7 meq/g or more, and particularly preferably 1.8 meq/g or more. From the viewpoint of durability, it is preferable for the polymer electrolyte to have an IEC value of 3.0 meq/g or less, more preferably 2.7 meq/g or less, and particularly preferably 2.5 meq/g or less.

Among the polymer electrolytes described above, it is preferable to adopt a hydrocarbon based polymer electrolyte from the viewpoint of realizing good electrolysis performance and good power generation performance. Among the various hydrocarbon based polymer electrolytes, it is preferable to adopt an aromatic hydrocarbon based polymer electrolyte, particularly preferably a polyether ketone based block copolymer.

The content of the hydrocarbon based polymer electrolyte is preferably 60 mass% or more, more preferably 75 mass% or more, still more preferably 90 mass% or more, and particularly preferably 100 mass%, relative to the total mass, which accounts for 100 mass%, of the polymer electrolyte contained in the polymer electrolyte membrane.

The polymer electrolyte membrane may be composed of multiple layers. In the case where the polymer electrolyte membrane is composed of multiple layers, the polymer electrolytes contained in the respective layers may be of the same structure or of different structures. These multiple layers may form a layered arrangement that includes, for example, a layer containing a hydrocarbon based polymer electrolyte and a layer containing a fluorine based polymer electrolyte or form an arrangement that includes a composite layer containing a porous base material and a polymer electrolyte with either side or both sides overlaid with a non-composite layer containing a polymer electrolyte but not containing a porous base material. The composite layer is a layer that is formed mainly of a porous base material with pores filled with a polymer electrolyte. Examples of the porous base material include woven fabrics, nonwoven fabrics, porous films, and mesh fabrics.

It is preferable that the thickness of the composite layer accounts for 10% to 90%, more preferably 20% to 80%, and particularly preferably 30% to 70%, of the total thickness, which accounts for 100%, of the polymer electrolyte membrane. Here, the thickness of the composite layer means the thickness of the porous base material. Specifically, in the case of an electrolyte membrane incorporated in a water electrolysis device, the thickness of the composite layer is preferably in the range of 22 to 47 µm, more preferably in the range of 25 to 45 µm, and particularly preferably in the range of 30 to 43 µm. On the other hand, the thickness of each non-composite layer is preferably 3 µm or more, more preferably 5 µm or more, and particularly preferably 10 µm or more. On the other hand, the thickness of each non-composite layer is preferably is 45 µm or less, more preferably 40 µm or less, and particularly preferably 35 µm or less.

In the case of a polymer electrolyte membrane that is composed of multiple layers, it may be structured in such a manner that all layers contain a compound N or only some of the layers contain a compound N. In the latter structure, it is preferable that the compound N be contained at least in the layer that is closest to the cathode catalyst layer.

The polymer electrolyte membrane may also contain various additives such as antioxidants, surface active agents, radical scavengers, hydrogen peroxide decomposers, nonelectrolyte polymers, elastomers, and fillers, as long as they do not impair the preferred effects of the present invention.

From the viewpoint of maintaining good electrolysis performance over a long period of time in a water electrolysis device, it is preferable that the thickness of the polymer electrolyte membrane be 20 µm or more, more preferably 30 µm or more, still more preferably 40 µm or more, and particularly preferably 50 µm or more. The thickness is preferably 250 µm or less, more preferably 200 µm or less, still more preferably 180 µm or less, and particularly preferably 150 µm or less.

### [Other layers]

The separator film may includes other layers in addition to the polymer electrolyte membrane. Here, the term "other layer" mean a layer in which the polymer electrolyte content is less than 50 mass% of the total solid content, which accounts for 100 mass%, in the layer. Such other layers are not particularly limited and various functional layers may be useful. Examples thereof include protective layer (for protecting the polymer electrolyte membrane), adhesive layer (for enhancing adhesion between the polymer electrolyte membrane and catalyst layer), and gas migration suppression layer (for decomposing or capturing gases such as hydrogen, oxygen, and hydrogen peroxide). In addition, the other layers may also include those designed especially for incorporating a compound N into the separator film. Such other layers may contain a polymer electrolyte as long as it does not impair their functions.

If such other layers are provided, their thickness is preferably in the range of 0.1 to 30 µm, more preferably in the range of 0.5 to 20 µm, and particularly preferably in the range of 1 to 15 µm.

### [Catalyst layer]

In an embodiment of the present invention, the catalyst coated membrane has a first catalyst layer disposed on one surface of a separator film and a second catalyst layer disposed on the other surface of the separator film. Here, the first catalyst layer and the second catalyst layer each contain, as a first metal, the platinum element and/or the iridium element, and the first catalyst layer and/or the second catalyst layer each further contain, as a second metal, at least one element selected from the group consisting of gold, silver, copper, nickel, palladium, cobalt, rhodium, iron, ruthenium, and osmium.

In a fuel cell, it is preferable that the first catalyst layer function as an oxygen reduction catalyst layer and that, at the same time, the second catalyst layer function as a hydrogen oxidation catalyst layer. Here, it is preferable that the first catalyst layer (oxygen reduction catalyst layer) contain the platinum element as the first metal and that, at the same time, the second catalyst layer (hydrogen oxidation catalyst layer) contain the platinum element as the first metal. In addition, it is preferable that the first catalyst layer and/or the second catalyst layer each contain, as the second metal, one element selected from the group consisting of cobalt, nickel, and ruthenium.

In a water electrolysis device, it is preferable that the first catalyst layer function as an oxygen generation catalyst layer and that, at the same time, the second catalyst layer function as a proton reduction catalyst layer. Here, it is preferable that the first catalyst layer (oxygen generation catalyst layer) contain the iridium element as the first metal and that, at the same time, the second catalyst layer (proton reduction catalyst layer) contain the platinum element as the first metal. In addition, it is more preferable that the second catalyst layer contain the ruthenium element as the second metal.

The catalyst layers used for water electrolysis devices will be described in detail below. In a water electrolysis device, the first catalyst layer (oxygen generation catalyst layer) works as an anode catalyst layer while the second catalyst layer (proton reduction catalyst layer) works as a cathode catalyst layer. Hereinafter, the first catalyst layer will be occasionally referred to as the anode catalyst layer while the second catalyst layer will be occasionally referred to as the cathode catalyst layer.

### [Anode catalyst layer (first catalyst layer)]

In a water electrolysis device, the anode serves to electrolyze water to generate oxygen and protons, and accordingly, the anode catalyst is occasionally referred to as oxygen generation catalyst. It is preferable that the anode catalyst layer contain the iridium element as the first metal. The iridium element is useful as an oxygen generation catalyst. Specifically, the inclusion of the iridium element as catalyst allows the anode catalyst layer to serve to ensure enhanced electrolysis performance.

Useful catalysts that contain the iridium element include zero-valent iridium, iridium oxide, iridium carbide, and iridium nitride, and among these, iridium oxide is preferred from the viewpoint of ensuring good electrolysis performance maintained for a longer period of time. Such catalysts containing the iridium element are preferably in the form of particles.

These catalysts containing the iridium element may be in the form of catalyst-supported particles in which catalysts are supported on carrier particles of metal oxides such as titanium oxide, tin oxide, tantalum oxide, niobium oxide, zirconium oxide, and tungsten oxide. In a water electrolysis device, the anode present therein is in a high-potential environment, and therefore, it is desirable to adopt a catalyst carrier that is relatively high in electrochemical oxidation resistance. In this respect, the above metal oxides are preferred because they are relatively high in electrochemical oxidation resistance.

A catalyst having the iridium element is preferably in the form of bare particles containing the iridium element or in the form of catalyst-supported particles, that is, a combination of carrier particles and a metal oxide supported thereon. Among these, it is particularly preferable to adopt bare particles that containing the iridium element.

On the other hand, carbon particles such as carbon black particles are generally known as good carrier for catalyst-supported particles. When used for water electrolysis, however, it is preferable that the content of carbon particles be small from the viewpoint of durability of the anode catalyst layer. Here, favorable shapes of carbon particles include spherical, plate-like, and fibrous. The content of carbon particles in the anode catalyst layer is preferably less than 0.1 mg/cm², more preferably less than 0.05 mg/cm², and still more preferably less than 0.02 mg/cm², and furthermore it is particularly preferable that no carbon particles be contained at all.

The content of the iridium element in the anode catalyst layer is preferably 50 mass% or more, more preferably 60 mass% or more, still more preferably 70 mass% or more, and particularly preferably 80 mass% or more, relative to the total content, which accounts for 100 mass%, of all metal elements used as catalysts in the anode catalyst layer. The upper limit is preferably 100 mass% or less.

The anode catalyst layer may contain, as the first metal, the platinum element in combination with the iridium element. When performing water electrolysis, back diffusion of hydrogen that is generated at the cathode may occur to allow the hydrogen gas to mix into oxygen generated at the anode, thereby leading to an explosion risk. However, the platinum element can act as a catalyst for generating water from hydrogen and oxygen, and accordingly, it can serve to avoid the above explosion risk. In addition, among the substances that can work as the second metal, there are some that function as catalysts for generating water from hydrogen and oxygen. Examples thereof include noble metal elements such as ruthenium, rhodium, palladium, gold, silver, and osmium. Of these noble metal elements, the use of palladium is more preferable. Examples of catalysts that contain the platinum element and noble metal elements listed above include zero-valent ones, oxides, carbides, and nitrides. Of these, the use of a zero-valent one is preferable.

In the case where the anode catalyst layer contains the platinum element and/or noble metal elements as listed above in combination with the iridium element, the content of the platinum element and/or the noble metal elements is preferably in the range of 1 to 90 parts by mass, more preferably in the range of 5 to 80 parts by mass, and particularly preferably in the range of 10 to 50 parts by mass, relative to 100 parts by mass of the iridium element.

In terms of the amount by mass per unit area of the anode catalyst layer, the content of the iridium element is preferably in the range of 0.2 to 2.0 mg/cm², more preferably in the range of 0.4 to 1.5 mg/cm², and particularly preferably in the range of 0.6 to 1.3 mg/cm².

It is preferable that the anode catalyst layer further contain a polymer electrolyte. As the polymer electrolyte, it may be useful to use a hydrocarbon based polymer electrolyte or a fluorine based polymer electrolyte such as mentioned above. The anode used in a water electrolysis device is in a high potential environment, and therefore, it is preferable to adopt a fluorine based polymer electrolyte because it is relatively high in resistance to electrochemical oxidation. It is more preferable to adopt a perfluorocarbon sulfonic acid based polymer.

In the case where the anode catalyst layer contains a polymer electrolyte, the ratio (Ya) of the mass of the polymer electrolyte in the anode catalyst layer relative to the mass of the iridium element, that is, the ratio of (mass of polymer electrolyte) / (mass of iridium element), is preferably 0.05 or more, more preferably 0.07 or more, and particularly preferably 0.1 or more, from the viewpoint of electrolysis performance. On the other hand, from the viewpoint of diffusibility of the oxygen gas generated at the anode, the above ratio is preferably less than 0.5, more preferably less than 0.4, still more preferably less than 0.3, and particularly preferably less than 0.25.

From the viewpoint of electrolysis performance, the thickness of the anode catalyst layer is preferably 0.5 µm or more, more preferably 1 µm or more, and particularly preferably 3 µm or more. On the other hand, from the viewpoint of diffusibility of the oxygen gas generated at the anode and physical stability properties (such as cracking during operation), the above thickness is preferably 25 µm or less, more preferably 20 µm or less, still more preferably 15 µm or less, and particularly preferably 10 µm or less.

### [Cathode catalyst layer (second catalyst layer)]

In a water electrolysis device, the cathode works to generate hydrogen as it reduces protons generated at the anode, and therefore, the anode catalyst is occasionally referred to as proton reduction catalyst. It is preferable for the cathode catalyst layer to contain the platinum element as the first metal. The platinum element is useful as a proton reduction catalyst.

It is preferable for the cathode catalyst layer to further contain the ruthenium element as the second metal. The inclusion of both the platinum element and the ruthenium element as catalysts makes it possible to maintain good electrolysis performance for a still longer period of time. From the viewpoint of maintaining good water electrolysis performance over a longer period of time, it is preferable that the mass ratio (Ru/Pt) between the platinum element (Pt) and the ruthenium element (Ru) be 0.1 or more, more preferably 0.2 or more, still more preferably 0.3 or more, and particularly preferably 0.4 or more. On the other hand, the above mass ratio is preferably 2.0 or less, more preferably 1.7 or less, still more preferably 1.5 or less, and particularly preferably 1.3 or less. Compared to this, from the viewpoint of electrolysis performance, the mass ratio of Pt relative to the total mass of Pt and Ru, i.e. the ratio Pt/(Pt + Ru), is preferably 0.40 or more, more preferably 0.50 or more, and particularly preferably 0.60 or more. The above mass ratio of Pt/(Pt + Ru) is preferably 0.90 or less, more preferably 0.80 or less, and particularly preferably 0.75 or less.

In the cathode catalyst layer, a catalyst containing the platinum element and a catalyst containing the ruthenium element may be used individually or may be used in the form of a platinum-ruthenium alloy or in the form of a combination of carbon particles supporting platinum and those supporting ruthenium. Hereinafter, carbon particles that support platinum will be referred to as platinum-supported carbon particles; carbon particles that support ruthenium will be referred to as ruthenium-supported carbon particles; carbon particles that support both platinum and ruthenium will be referred to as platinum-ruthenium-supported carbon particles; and carbon particles that support a platinum-ruthenium alloy will be referred to as platinum-ruthenium alloy-supported carbon particles. In addition, these will be collectively referred to as platinum etc.-supported carbon particles.

Examples of useful materials for the carbon particles described above include carbon black materials such as furnace black, acetylene black, and Ketjenblack, and materials produced by subjecting such carbon black to graphitization treatment.

When the aforementioned platinum etc.-supported carbon particles are to be used, it is preferable, from the viewpoint of physical strength and durability of the cathode catalyst layer, that the BET specific surface area of the platinum etc.-supported carbon particles be 400 m²/g or less, more preferably 300 m²/g or less, still more preferably 200 m²/g or less, and particularly preferably 150 m²/g or less. The the above BET specific surface area is preferably 30 m²/g or more, more preferably 50 m²/g or more, and particularly preferably 70 m²/g or more.

From the viewpoint of realizing better electrolysis performance, it is preferable that the catalyst used in the cathode catalyst layer be in the form of platinum etc.-supported carbon particles, and more preferably platinum-ruthenium-supported carbon particles. From the viewpoint of maintaining good electrolysis performance over a longer period of time, it is preferable that the catalyst used in the cathode catalyst layer be platinum-ruthenium alloy-supported carbon particles.

The loading rate of catalyst elements on platinum etc.-supported carbon particles (the ratio of the mass of the catalyst elements to the mass of the platinum etc.-supported carbon particles) is preferably in the range of 20 to 70 mass%, more preferably in the range of 30 to 65 mass%, and particularly preferably in the range of 35 to 60 mass%.

In terms of the amount by mass per unit area of the cathode catalyst layer, the content of the platinum element is preferably 0.05 mg/cm² or more, more preferably 0.1 mg/cm² or more, and particularly preferably 0.2 mg/cm² or more, from the viewpoint of electrolysis performance. Compared to this, from the viewpoint of cost, the mass of the platinum element is preferably less than 1.0 mg/cm², more preferably less than 0.7 mg/cm², and particularly preferably less than 0.5 mg/cm².

On the other hand, from the viewpoint of maintaining good electrolysis performance over a long period of time, it is preferable that the mass of the ruthenium element per unit area be 0.03 mg/cm² or more, more preferably 0.05 mg/cm² or more, and particularly preferably 0.1 mg/cm² or more. In addition, it is preferable for the above content to be less than 0.8 mg/cm², more preferably less than 0.6 mg/cm², and particularly preferably less than 0.4 mg/cm².

It is preferable for the cathode catalyst layer to further contain a polymer electrolyte. As the polymer electrolyte, a hydrocarbon based polymer electrolyte or a fluorine based polymer electrolyte such as mentioned above may be used. In particular, it is preferable to adopt a fluorine based polymer electrolyte, and it is more preferable to adopt a perfluorocarbon sulfonic acid based polymer. Furthermore, it is still more preferable that both the anode catalyst layer and the cathode catalyst layer contain a polymer electrolyte.

In the case where the cathode catalyst layer contains a polymer electrolyte, the ion exchange capacity (IEC) of the polymer electrolyte is preferably less than 1.50 meq/g, more preferably less than 1.40 meq/g, and particularly preferably less than 1.30 meq/g. As the lower limit, it is preferably 0.40 meq/g or more.

From the viewpoint of electrolysis performance, it is preferable that the ion exchange capacity of the polymer electrolyte contained in the cathode catalyst layer (hereinafter referred to as IEC_{CA}) be smaller than the ion exchange capacity of the polymer electrolyte contained in the polymer electrolyte membrane (hereinafter referred to as IEC_{PE}). More specifically, it is preferable for the ratio of IEC_{CA} to IEC_{PE} (IEC_{CA}/IEC_{PE}) to be 0.90 or less, more preferably 0.80 or less, still more preferably 0.70 or less, and particularly preferably 0.65 or less. On the other hand, it is preferable for the ratio (IEC_{CA}/IEC_{PE}) to be 0.20 or more, more preferably 0.30 or more, still more preferably 0.35 or more, and particularly preferably 0.40 or more.

In the case where the cathode catalyst layer contains a polymer electrolyte, it is preferable, from the viewpoint of electrolysis performance, that the ratio (Yc) of the mass of the polymer electrolyte present in the cathode catalyst layer relative to the total mass of the platinum element and the ruthenium element, that is, the ratio of (mass of polymer electrolyte) / (mass of platinum element + mass of ruthenium element), be 0.25 or more, more preferably 0.40 or more, more preferably 0.50 or more, and particularly preferably 0.60 or more. On the other hand, from the viewpoint of diffusibility of the oxygen gas generated at the cathode, it is preferable for the above ratio to be 1.1 or less, more preferably 1.0 or less, and particularly preferably 0.9 or less.

In particular, it is particularly preferable that the ratio (Ya) be 0.05 or more and less than 0.5 and that the ratio (Yc) be 0.425 or more and 1.1 or less. Furthermore, it is preferable for the ratio (Ya) to be smaller than the ratio (Yc).

From the viewpoint of electrolysis performance, it is preferable for the thickness of the cathode catalyst layer to be 0.5 µm or more, more preferably 1 µm or more, and particularly preferably 3 µm or more. On the other hand, from the viewpoint of diffusibility of the oxygen gas generated at the cathode and physical stability properties (such as cracking during operation) of the catalyst layer, it is preferable for the above thickness to be 25 µm or less, more preferably 20 µm or less, still more preferably 15 µm or less, and particularly preferably 10 µm or less.

### [Catalyst coated membrane]

In the catalyst coated membrane according to the embodiment of the present invention, an anode catalyst layer (first catalyst layer) is disposed on one surface of a separator film while a cathode catalyst layer (second catalyst layer) is disposed on the other surface thereof.

The catalyst coated membrane according to the embodiment of the present invention can be produced, for example, by laminating an anode catalyst layer and a cathode catalyst layer separately on a separator film. Alternatively, the catalyst coated membrane according to the present invention can be completed in a fabrication process of the membrane electrode assembly described later. Details of the embodiment of the latter will be described later.

From the viewpoint of the adhesion between the separator film and the catalyst layers, it is preferable that both the anode catalyst layer and the cathode catalyst layer be laminated on the separator film. Hereinafter, the anode catalyst layer and the cathode catalyst layer will be occasionally referred collectively to as catalyst layers.

Good methods for laminating a catalyst layer on a separator film include, for examples, coating, transferring, and the combination of coating and transferring. To carry out these methods, generally known techniques can be adopted and there are no particularly limited thereon.

The coating method is intended to coat a separator film with a coating liquid designed for catalyst layer formation using a known coating technique. In a typical technique for the transferring method, a catalyst layer transfer sheet composed of a catalyst layer laid on a transfer base material is put on a separator film, followed by laminating them by hot pressing.

In the catalyst coated membrane according to the embodiment of the present invention, the thicknesses of the separator film, anode catalyst layer, and cathode catalyst layer are as described above, but from the viewpoint of maintaining good electrolysis performance for a longer period of time, it is preferable to appropriately adjust the relationship among these thicknesses. For example, it is preferable that the thickness of the anode catalyst layer and/or the thickness of the cathode catalyst layer be equal to 25% or less relative to the thickness of the separator film, which accounts for 100%. It is preferable for the thickness of the anode catalyst layer to be equal to 25% or less, more preferably 20% or less, and particularly preferably 15% or less, relative to the thickness of the separator film, which accounts for 100%. Here, as the lower limit, it is preferably equal to 1% or more. It is preferable for the thickness of the cathode catalyst layer to be equal to 25% or less, more preferably 20% or less, and particularly preferably 15% or less, relative to the thickness of the separator film, which accounts for 100%. Here, as the lower limit, it is preferably equal to 1% or more.

Furthermore, from the same point of view as described above, it is preferable for the thickness of the anode catalyst layer to be equal to 25% or less, more preferably 20% or less, and particularly preferably 15% or less, relative to the thickness of the polymer electrolyte membrane, which accounts for 100%. Here, as the lower limit, it is preferably equal to 1% or more. It is preferable for the thickness of the cathode catalyst layer to be equal to 25% or less, more preferably 20% or less, and particularly preferably 15% or less, relative to the thickness of the polymer electrolyte membrane, which accounts for 100%. Here, as the lower limit, it is preferably equal to 1% or more.

### [Membrane electrode assembly (MEA)]

The catalyst coated membrane according to the embodiment of the present invention serves to form a membrane electrode assembly by laying electrode bases on both sides thereof. That is, the membrane electrode assembly has an anode catalyst layer and an anode electrode base disposed on one side of a separator film and has a cathode catalyst layer and a cathode electrode base disposed on the other side thereof.

The electrode bases (which may also serve as gas diffusion layers) are primarily intended to serve for applying voltage and are formed of a conductive material. Useful materials for the electrode bases include, for example, porous base materials of metal, carbon, or the like. Examples of metal porous base materials include metal nonwoven fabrics, sintered metal fiber materials, sintered metal powder materials, and sintered metal foam materials, while examples of carbon porous base materials include carbon felt, carbon paper, carbon cloth, and sintered graphite particle materials.

To work as the anode electrode base, the use of a porous metal base material is preferred because of being high in corrosion resistance in environments with a high potential, high oxygen content, strong acidity, etc. As a metal to form such a porous metal base, it is preferable, from the above point of view, to use titanium, aluminum, nickel, stainless steel, or an alloy containing at least one of these metals as main component, of which titanium and titanium based alloys are particularly preferred.

As a metal to form the cathode electrode base, it is preferable, from the viewpoint of material cost and conductivity, to use a porous carbon base material, and more preferable to use carbon paper.

In the catalyst coated membrane according to the embodiment of the present invention, either or both of the anode catalyst layer and the cathode catalyst layer may be disposed on their respective electrode bases. During the fabrication process of a membrane electrode assembly, electrode bases each having a catalyst layer laid thereon are arranged along with a separator film, and this enables the production of a structure in which the anode catalyst layer and the cathode catalyst layer are disposed in such a manner that they face each other with the separator film located in between. Thus, a catalyst coated membrane is completed during the process of fabricating a membrane electrode assembly, and the present invention includes this embodiment.

In the above embodiment, the anode catalyst layer and the cathode catalyst layer may each be disposed on an electrode base. However, depending on the type of electrode base material, sufficient adhesion with the catalyst layers may not be realized in some cases, and therefore, it is preferable to adopt an appropriately selected arrangement to suit a particular electrode base material. For example, porous carbon base materials exhibit relatively strong adhesion with catalyst layers, and accordingly, the assembly may be fabricated in such a manner that a cathode catalyst layer is laid on a porous carbon base material that is suitable as a cathode electrode base while an anode catalyst layer is laid on the separator film. For the lamination of a catalyst layer on a electrode base, an appropriate coating method or a transferring method may be selected from those listed above.

### [Application examples]

The catalyst coated membrane and the membrane electrode assembly according to the embodiments of the present invention can be applied to fuel cells, redox flow batteries, water electrolysis devices, electrochemical hydrogen compression devices, and the like. In particular, it is preferable for them to be applied to fuel cells and water electrolysis devices, particularly preferably to water electrolysis devices. Hereinafter, typical applications to water electrolysis devices will be described in detail, though it should be noted that the present invention is not limited thereto.

### [Water electrolysis cell and water electrolysis device]

The water electrolysis cell according to the present invention includes a membrane electrode assembly (MEA). The water electrolysis cell is internally partitioned by a separator film into an anode (composed mainly of an anode catalyst layer and an anode electrode base) and a cathode (composed mainly of a cathode catalyst layer and a cathode electrode base).

Fig. 1 is a schematic diagram of a cross section of a typical water electrolysis cell according to the present invention. The water electrolysis cell 1 is internally partitioned by a separator film 10 into an anode 20 and a cathode 30. Here, the anode 20 is composed of an anode catalyst layer and an anode electrode base, which are not shown in the figure, and the cathode 30 is composed of a cathode catalyst layer and a cathode electrode base, which are not shown in the figure. In addition, separator films 41 and 42 are provided to sandwich these components from both sides.

In a water electrolysis device, a plurality of water electrolysis cells are arranged, and a power supply (not shown in the figure) is connected to each anode 20 and cathode 30 to apply a voltage. As basic constituent units, a water electrolysis device includes a water supply part for supplying water to the water electrolysis cells, a power supply part for supplying electric power to the water electrolysis cells, an oxygen discharge part for discharging generated oxygen, a hydrogen discharge part for discharging generated hydrogen, a water discharge unit for discharging excess water generated from electrolysis, and the like.

### [Water electrolysis method]

The water electrolysis method according to the present invention is to be conducted using the water electrolysis cell according to the present invention and the water electrolysis device according to the present invention. More specifically, the water electrolysis method according to an embodiment of the present invention preferably involves supplying water to water electrolysis cells each being internally partitioned into an anode and a cathode by a separator film that contains a polymer electrolyte membrane, and performing electrolysis to generate oxygen at the anode and hydrogen at the cathode, wherein: the anode catalyst layer that forms the anode contains the iridium element as catalyst; the cathode catalyst layer that forms the cathode contains the platinum element as catalyst; and the separator film contains a compound N that has a nitrogen-containing heterocyclic ring. Furthermore, it is preferable for the cathode catalyst layer to contain both the platinum element and the ruthenium element as catalysts. For this method, those polymer electrolyte membranes, separator films that include the former, compounds N, anode catalyst layers, and cathode catalyst layers that are described above can be applied suitably.

There are no particular limitations on the technique to use for supplying water to the water electrolysis cell according to the present invention, and generally known techniques can be adopted. Preferred techniques for supplying water to the water electrolysis cell according to the present invention include, for example, supplying water to the anode, supplying water to the cathode, and supplying water to both the anode and the cathode. To perform the above water supply techniques, it is preferable to use an appropriate tool such as pump in order to supply water from outside the water electrolysis cell. Any of the above water supply techniques can be adopted for the water electrolysis method used for the present invention. In particular, it is preferable for water to be supplied at least to the anode because the generation of oxygen and protons from the oxidation reaction of water is preferably enhanced strongly from the viewpoint of electrolysis efficiency.

### EXAMPLES

Hereinafter, the present invention will be described in more detail with reference to examples, although it should be noted that the present invention is not limited thereto. The various measurements described below were taken under the conditions described below.

### (1) Molecular weight of polymer

The number average molecular weight and the weight average molecular weight of polymers were measured by GPC. The gel permeation chromatograph used was HLC-8022GPC manufactured by Tosoh Corporation. In addition, two GPC columns, TSK gel Super HM-H (inner diameter 6.0 mm, length 15 cm) manufactured by Tosoh Corporation, were used. Measurement was performed using N-methyl-2-pyrrolidone solvent (N-methyl-2-pyrrolidone solvent containing 10 mmol/L lithium bromide) at a flow rate of 0.2 mL/min, and the number average molecular weight and weight average molecular weight were calculated in terms of standard polystyrene.

### (2) Ion exchange capacity (IEC)

Measurements were taken by carrying out the neutralization titration steps 1) to 4) described below. Three measurements were taken and their average was adopted.
1) A block copolymer specimen was proton-substituted and fully rinsed with pure water. After wiping off water, the specimen was vacuum-dried at 100°C for 12 hours or more, and the dry weight was measured.
2) A 50 mL volume of a 5wt% aqueous solution of sodium sulfate was added to the block copolymer specimen, and the resulting solution was allowed to stand for 12 hours for conducting ion exchange.
3) The resulting sulfuric acid was titrated with a 0.01 mol/L aqueous solution of sodium hydroxide. A commercially available phenolphthalein solution for titration, adjusted to 0.1 w/v%, was added as indicator and titration was continued to reach an end point where the color turned pale reddish purple.
4) The IEC was calculated by the equation given below. 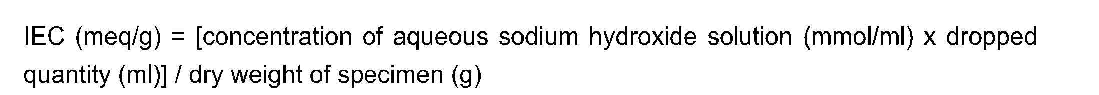
IEC (meq/g) = [concentration of aqueous sodium hydroxide solution (mmol/ml) x dropped quantity (ml)] / dry weight of specimen (g)

### (3) Measurement of thickness of separator film and catalyst layers

Under the conditions described below, cross-sections of the separator film and each catalyst layer were observed using a scanning electron microscope (SEM), and the thicknesses of the separator film, anode catalyst layer, and cathode catalyst layer were measured from the images obtained.

### Equipment: Field emission type scanning electron microscope (FE-SEM) S-4800 (manufactured by Hitachi High-Technologies Corporation)

· Accelerating voltage: 2.0 kV
· Pretreatment: Measurement was performed after Pt coating of cross-sectional specimen prepared by BIB method.
· BIB method: A cross-sectional specimen preparation device using argon ion beam. A shielding plate was placed directly above the specimen, and etching was performed by applying a broad argon ion beam from above to prepare an observation/analysis surface (cross-section).

### (4) Measurement of BET specific surface area of platinum etc.-supported carbon particles

Platinum etc.-supported carbon particles were put in a glass container and vacuum-dried at 23°C for 16 hours. Subsequently, the platinum etc.-supported carbon particles vacuum-dried in advance were put in a dedicated container that had been dried and weighed in advance, and pretreatment was performed under the conditions described below. After the completion of the pretreatment, the total mass of the dedicated container and the platinum etc.-supported carbon particles was measured, and the mass of the platinum etc.-supported carbon particles was calculated from the difference between the total mass and the mass of the dedicated container. Subsequently, the pretreated platinum etc.-supported carbon particles, contained in the dedicated container, were mounted on a measurement device, and gas adsorption measurement was performed under the conditions described below, followed by plotting an adsorption isotherm on a graph with a vertical axis of p/V (p⁰ - p) and a horizontal axis of p/p⁰. From the adsorption isotherm, data for p/p⁰ in the range of 0.05 to 0.3 on the horizontal axis were extracted, and an approximate curve was created by the least-squares method, followed by calculating the BET specific surface area from the slope and the vertical axis intercept of the curve.

### <Pretreatment conditions>

· Equipment: BELPREP VAC II (manufactured by MicrotracBEL Corp.)
· Temperature: 100°C
· Time: 5 hours
· Treatment atmosphere: degassed at reduced pressure of 10 Pa or less <BET specific surface area measurement>
· Equipment: BELSORP-18 PLUS HT (manufactured by MicrotracBEL Corp.) · Temperature: 77 K (liquid nitrogen temperature)
· Dead volume measurement gas: He
· Adsorbate: N₂
· Equilibrium setting time: 180 seconds (stabilization waiting time at particular pressure)
· Specific surface area analysis method: BET method

### <Meanings of symbols>

· V: Amount of N₂ adsorbed on catalyst surface, measured at particular pressure
· p: Measurement pressure
· p₀: Atmospheric pressure
· p/p₀: Relative pressure

### (5) Evaluation of electrolysis performance

Before starting the evaluation of the electrolysis performance of a catalyst coated membrane, a membrane electrode assembly was fabricated by the procedure described below.

### [Membrane electrode assembly]

A membrane electrode assembly was fabricated by laminating a commercially available gas diffusion electrode (24BCH, manufactured by SGL Carbon), as the cathode electrode base, on the cathode catalyst layer side of the catalyst coated membrane produced in each Example or Comparative example while laminating a commercially available porous sintered titanium plate, as anode electrode base, on the anode catalyst layer side thereof.

### [Water electrolysis method]

The membrane electrode assembly prepared above was set in a JARI standard cell, Ex-1 (electrode area 25 cm²), manufactured by EIWA Corporation, and the cell temperature was adjusted to 60°C. Deionized water having an electrical conductivity of 1 µS/cm or less was supplied to both the anode and the cathode at a flow rate of 0.2 L/min under atmospheric pressure, and an appropriate voltage was applied in such a manner that the current density was maintained at 1.5 A/cm², followed by performing water electrolysis for 2,000 hours.

The applied voltage was measured at time points 0 hour and 2,000 hours after the start of electrolysis, and the rate of voltage increase that occurred during the period of 2,000 hours was calculated by the formula 1 given below. $Voltage increase rate = \left({V}_{1}-{V}_{0}\right) / {V}_{0} \times 100$ formula 1

In the formula, V₁ represents the applied voltage measured at the end of the 2,000 hour period and V₀ represents the initial applied voltage (at 0-hour point).

A lower voltage at the 0-hour point (initial voltage) indicates higher electrolysis performance, and a lower voltage increase rate indicates less deterioration of electrolysis performance.

### [Synthesis of polyether ketone based block copolymer (PEK block)]

### [Synthesis example 1]

### (Synthesis of 2,2-bis(4-hydroxyphenyl)-1,3-dioxolane (K-DHBP) represented by chemical formula (G1) given below)

To a 500 mL flask equipped with a stirrer, thermometer, and distillation tube, 49.5 g of 4,4'-dihydroxybenzophenone, 134 g of ethylene glycol, 96.9 g of trimethyl orthoformate, and 0.50 g of p-toluene sulfonic acid monohydrate were fed and dissolved. Then, the resulting solution was stirred for 2 hours while maintaining its temperature at 78°C to 82°C. Furthermore, the internal temperature was gradually increased to 120°C, and heating was continued until the distilling of methyl formate, methanol, and trimethyl orthoformate completely stopped. The resulting reaction solution was cooled to room temperature and then the reaction solution was diluted with ethyl acetate. The organic layer was washed with 100 mL of a 5% aqueous solution of potassium carbonate and separated, and the solvent was evaporated. Then, 80 ml of dichloromethane was added to the residue to precipitate a crystalline material, which was separated by filtering and dried to provide 52.0 g of 2,2-bis(4-hydroxyphenyl)-1,3-dioxolane represented by chemical formula (G1) given below. GC analysis of the crystalline material was performed and results showed that it contained 99.9% 2,2-bis(4-hydroxyphenyl)-1,3-dioxolane and 0.1% 4,4'-dihydroxybenzophenone. The purity was 99.9%.

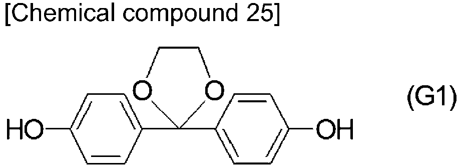

### [Synthesis example 2]

### (Synthesis of disodium-3,3'-disulfonate-4,4'-difluorobenzophenone represented by chemical formula (G2) given below)

First, 109.1 g of 4,4'-difluorobenzophenone (reagent, manufactured by Sigma-Aldrich Japan) was reacted in 150 mL of fuming sulfuric acid (50% SO₃) (reagent, manufactured by FUJIFILM Wako Pure Chemical Corporation) at 100°C for 10 hours. Then, the solution was gradually poured into a large volume of water, and after neutralizing it with sodium hydroxide, 200 g of sodium chloride (NaCl) was added to precipitate the synthesis product. The resulting precipitate was separated by filtering, followed by recrystallization in an aqueous ethanol solution to provide disodium-3,3'-disulfonate-4,4'-difluorobenzophenone represented by the chemical formula (G2) given below. The purity was 99.3%.

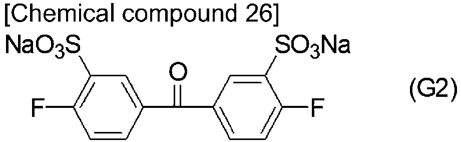

### [Synthesis example 3]

### (Synthesis of nonionic oligomer a1 represented by general formula (G3) given below)

To a 2,000 mL SUS-made polymerization device equipped with a stirrer, nitrogen gas supply tube, and Dean-Stark trap, 16.59 g of potassium carbonate (Aldrich reagent, 120 mmol), 25.83 g of K-DHBP (100 mmol) prepared in Synthesis example 1, and 20.3 g of 4,4'-difluorobenzophenone (Aldrich reagent, 93 mmol) were fed. After performing nitrogen purging, 300 mL of N-methylpyrrolidone (NMP) and 100 mL of toluene were added and dehydration was performed at 150°C, followed by heating the solution to remove toluene and conducting polymerization at 170°C for 3 hours The resulting material was purified by reprecipitation with a large amount of methanol to provide a hydroxyl end-capped nonionic oligomer a1. The number average molecular weight of the hydroxyl end-capped nonionic oligomer a1 was 10,000.

To a 500 mL three neck flask equipped with a stirrer, nitrogen supply tube, and Dean-Stark trap, 1.1 g of potassium carbonate (reagent, manufactured by Sigma-Aldrich Japan, 8 mmol) and 20.0 g (2 mmol) of the above hydroxyl end-capped nonionic oligomer a1 were fed. After performing nitrogen purging of the device, 100 mL of NMP and 30 mL of toluene were added, and dehydration was performed at 100°C, followed by raising the temperature to remove toluene. Furthermore, 2.2 g of hexafluorobenzene (reagent, manufactured by Sigma-Aldrich Japan, 12 mmol) was added, and the reaction was performed at 105°C for 12 hours. The resulting material was purified by reprecipitation with a large amount of isopropyl alcohol to provide a nonionic oligomer a1 (end-capped with fluoro group) represented by the general formula (G3) given below. It had a number average molecular weight of 11,000.

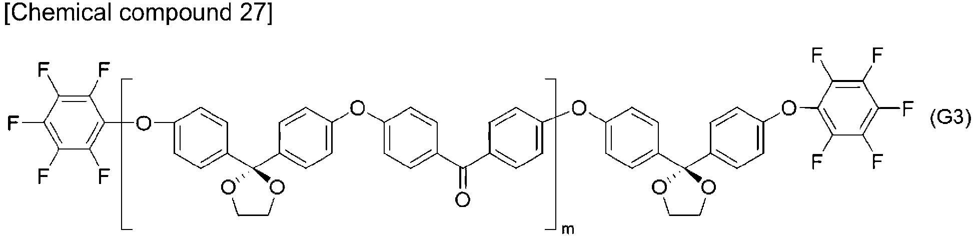

### [Synthesis example 4]

### (Synthesis of ionic oligomer a2 represented by general formula (G4) given below)

To a 2,000 mL SUS-made polymerization device equipped with a stirrer, nitrogen supply tube, and Dean-Stark trap, 27.6 g of potassium carbonate (reagent, manufactured by Sigma-Aldrich Japan, 200 mmol), 12.9 g (50 mmol) of K-DHBP prepared in Synthesis example 1, 9.3 g of 4,4'-biphenol (reagent, manufactured by Sigma-Aldrich Japan, 50 mmol), 39.3 g (93 mmol) of disodium-3,3'-disulfonate-4,4'-difluorobenzophenone prepared in Synthesis example 2, and 17.9 g of 18-crown-6 (manufactured by FUJIFILM Wako Pure Chemical Corporation, 82 mmol) were fed, followed by nitrogen purging, addition of 300 mL of NMP and 100 mL of toluene, dehydration at 150°C, heating to remove toluene, and polymerization at 170°C for 6 hours. The resulting material was purified by reprecipitation with a large amount of isopropyl alcohol to provide an ionic oligomer a2 (end-capped with hydroxy group) represented by the general formula (G4) given below. It had a number average molecular weight of 16,000. Here, M in the general formula (G4) represents hydrogen, Na, or K.

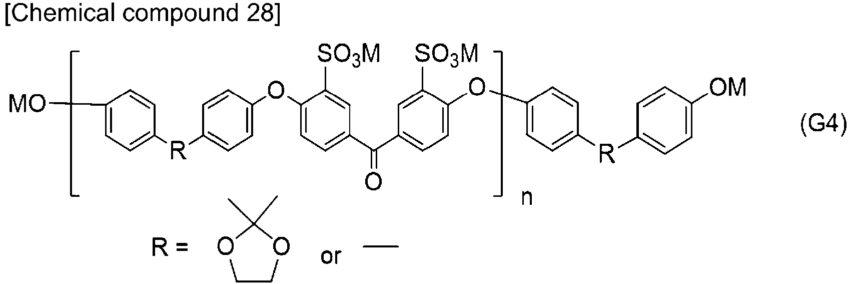

### (Synthesis of polyether ketone based block copolymer)

To a 2,000 mL SUS-made polymerization device equipped with a stirrer, nitrogen supply tube, and Dean-Stark trap, 16 g of an ionic oligomer a2 and 11 g of a nonionic oligomer a1 were fed, and NMP was added in such a manner that the total amount of oligomers fed accounted for 7 wt%, followed by carrying out their reaction at 105°C for 24 hours.

The resulting material was purified by reprecipitation with a large amount of a mixed solution of isopropyl alcohol and NMP (mass ratio 2/1), and the resulting precipitate was collected by filtering and washed with a large amount of an isopropyl alcohol block to provide a block copolymer b1. The resulting polyether ketone based block copolymer had a weight average molecular weight of 340,000 and an ion exchange capacity (IEC) of 2.1 meq/g.

### [Synthesis of compound N]

Compounds (E1), (E4), (E8), (E10), (E23), (E34), (E36), (F23), (P3), and (H3) were synthesized. Here, these compounds can be synthesized with reference to International Publication No. WO 2014/08413, International Publication No. WO 2015/152058, and International Publication No. WO 2015/156228. Furthermore, commercially available products were used as the compounds (F17), (F19), (P1), (H1), (H2), and porphyrin.

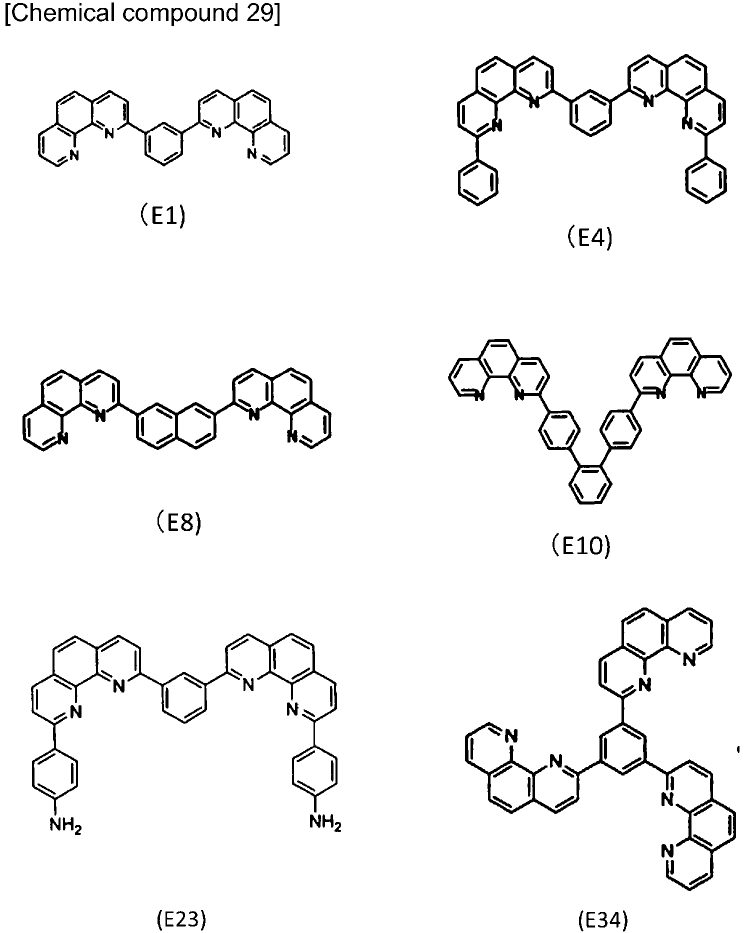

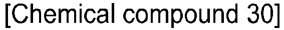

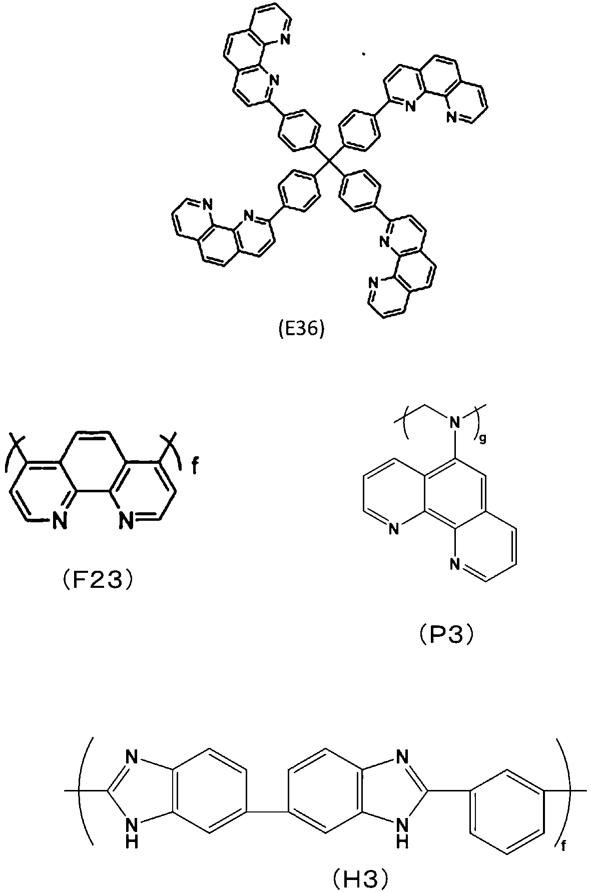

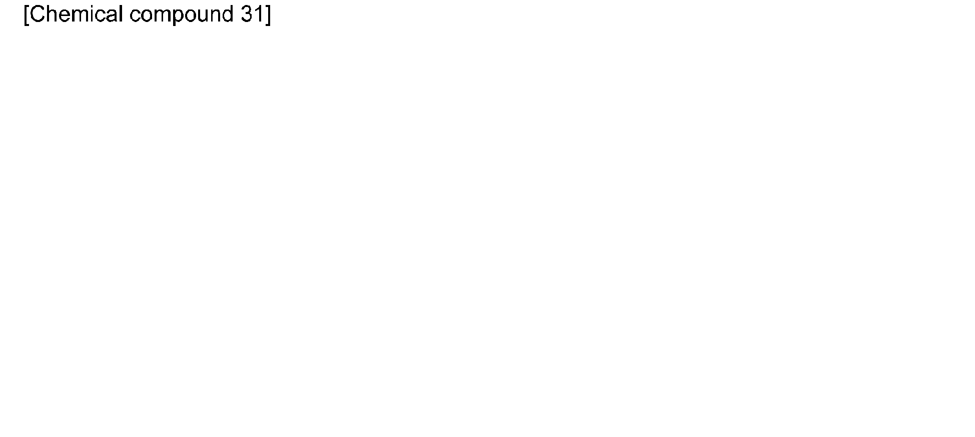

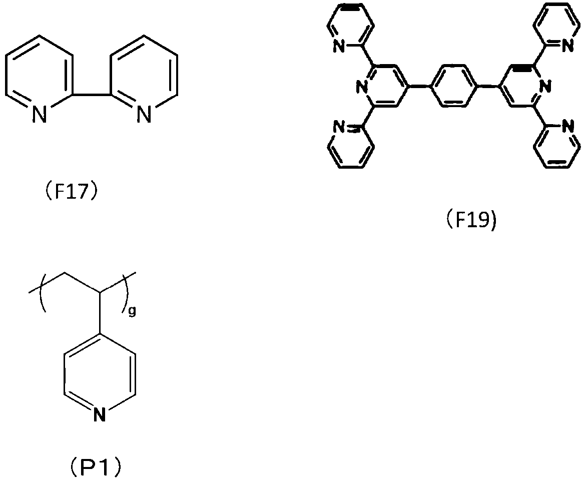

(H1) 1,10-phenanthroline
(H2) 5-amino-1,10-phenanthroline

### [Example 1]

### [Preparation of polymer electrolyte membrane]

A PET film of Lumirror (registered trademark) 125T60, manufactured by Toray Industries, Inc., was affixed to and fixed on a SUS plate using tape of Kapton (registered trademark). A 20 g amount of the polyether ketone based block copolymer synthesized above was dissolved in NMP. To the resulting solution, 100 mg of E1 was added as compound N, and the mixture was stirred for 3 minutes using a stirrer to provide a transparent solution having a polymer concentration of 13 mass%. The resulting solution was pressure-filtered using a polypropylene filter of 1 µm and used for cast-coating of the aforementioned PET film, followed by drying to provide a film-like membrane. Furthermore, this film was immersed in a 10 mass% aqueous solution of sulfuric acid at 80°C for 24 hours to ensure proton substitution and deprotection reaction, and then it was immersed in a large excess amount of pure water for 24 hours to ensure adequate washing to provide a polymer electrolyte membrane (thickness 90 µm). This polymer electrolyte membrane was used as separator film. In the separator film, the compound N accounts for 0.5 part by mass relative to 100 parts by mass of the polymer electrolyte.

### [Preparation of catalyst coated membrane]

An anode catalyst layer as described below was laid on one surface of the polymer electrolyte membrane (separator film) prepared above, and a cathode catalyst layer as described below was laid on the other surface thereof to prepare a catalyst coated membrane. Their thicknesses were adjusted in such a manner that the mass of the iridium element in the anode catalyst layer was 0.8 mg/cm² and that of the platinum element in the cathode catalyst layer was 0.25 mg/cm².

### <Anode catalyst layer>

The solid components are catalyst particles (IrO₂ catalyst Elyst Ir75 0480, manufactured by Umicore (Ir content 75%)), which account for 10 parts by mass, and a fluorine based polymer electrolyte (Nafion (registered trademark), product number D2020, manufactured by Chemours Company, IEC = 0.91 meq/g), which accounts for 1.3 parts by mass. The ratio (Ya) of the mass of the polymer electrolyte to the mass of the iridium element is 0.17. The anode catalyst layer had a thickness of 8 µm.

### <Cathode catalyst layer>

The solid components are catalyst particles (platinum-ruthenium alloy-supported carbon particles, TEC61E54, manufactured by Tanaka Precious Metal Technologies Co., Ltd. (catalyst loading rate 54 mass%, Pt/Ru mass ratio = 1/0.78, BET specific surface area 303 m²/g)), which accounts for 10 parts by mass, and a fluorine based polymer electrolyte (Nafion (registered trademark), product number D2020, manufactured by Chemours Company, IEC = 0.91 meq/g), which accounts for 4 parts by mass. The ratio (Yc) of the mass of the polymer electrolyte to the total mass of the platinum element and the ruthenium element is 0.74. The cathode catalyst layer had a thickness of 12 µm.

### [Comparative example 1]

Except that the compound N was not included in the polymer electrolyte membrane, the same procedure as in Example 1 was carried out to produce a catalyst coated membrane.

### [Examples 2 to 18]

Except that the type and addition amount of the compound N were changed from Example 1 as shown in Table 1, the same procedure as in Example 1 was carried out to produce a catalyst coated membrane.

### [Example 19]

Except that the polyether ketone based block copolymer used in Example 1 was replaced with the fluorine based polymer electrolyte described below, the same procedure as in Example 1 was carried out to produce a catalyst coated membrane.

### <Fluorine based polymer electrolyte>

The solution of Nafion (registered trademark), product number D2020, manufactured by Chemours Company (IEC = 0.91 meq/g), was used after replacing the solvent (water and 1-propanol) with NMP.

### [Example 20]

Except that the cathode catalyst layer used in Example 1 was replaced with the one described below, the same procedure as in Example 1 was carried out to produce a catalyst coated membrane.

### <Cathode catalyst layer>

The solid components are catalyst particles (platinum-ruthenium alloy-supported carbon particles, TEC66E50, manufactured by Tanaka Precious Metal Technologies Co., Ltd. (catalyst loading rate 50 mass%, Pt/Ru mass ratio = 1/0.52, BET specific surface area 312 m²/g)), which account for 10 parts by mass, and a fluorine based polymer electrolyte (Nafion (registered trademark), product number D2020, manufactured by Chemours Company), which accounts for 4 parts by mass. The ratio (Yc) of the mass of the polymer electrolyte to the total mass of the platinum element and the ruthenium element is 0.8. The cathode catalyst layer had a thickness of 11 µm.

### [Example 21]

Except that the cathode catalyst layer used in Example 1 was replaced with the one described below, the same procedure as in Example 1 was carried out to produce a catalyst coated membrane.

### <Cathode catalyst layer>

The solid components are catalyst particles (platinum-ruthenium alloy-supported carbon particles, TEC62E58-HT, manufactured by Tanaka Precious Metal Technologies Co., Ltd. (catalyst loading rate 58 mass%, Pt/Ru mass ratio = 1/1.04; BET specific surface area 285 m²/g)), which account for 10 parts by mass, and a fluorine based polymer electrolyte (Nafion (registered trademark), product number D2020, manufactured by Chemours Company), which accounts for 4 parts by mass. The ratio (Yc) of the mass of the polymer electrolyte to the total mass of the platinum element and the ruthenium element is 0.69. The cathode catalyst layer had a thickness of 13 µm.

### [Example 22]

Except that the cathode catalyst layer used in Example 1 was replaced with the one described below, the same procedure as in Example 1 was carried out to produce a catalyst coated membrane.

### <Cathode catalyst layer>

The solid components are catalyst particles (platinum-ruthenium alloy-supported carbon particles, TEC61E54-HT2, manufactured by Tanaka Precious Metal Technologies Co., Ltd. (catalyst loading rate 54 mass%, Pt/Ru mass ratio = 1/0.78, BET specific surface area 295 m²/g)), which account for 10 parts by mass, and a fluorine based polymer electrolyte (Nafion (registered trademark), product number D2020, manufactured by Chemours Company, IEC = 0.91 meq/g), which accounts for 4 parts by mass. The ratio (Yc) of the mass of the polymer electrolyte to the total mass of the platinum element and the ruthenium element is 0.74. The cathode catalyst layer had a thickness of 12 µm.

### [Example 23]

Except that the cathode catalyst layer used in Example 1 was replaced with the one described below, the same procedure as in Example 1 was carried out to produce a catalyst coated membrane.

### <Cathode catalyst layer>

The solid components are catalyst particles (platinum-ruthenium alloy-supported carbon particles, TEC61V54-HT2, manufactured by Tanaka Precious Metal Technologies Co., Ltd. (catalyst loading rate 54 mass%, Pt/Ru mass ratio = 1/0.78; BET specific surface area 90 m²/g)), which account for 10 parts by mass, and a fluorine based polymer electrolyte (Nafion (registered trademark), product number D2020, manufactured by Chemours Company, IEC = 0.91 meq/g), which accounts for 4 parts by mass. The ratio (Yc) of the mass of the polymer electrolyte to the total mass of the platinum element and the ruthenium element is 0.74. The cathode catalyst layer had a thickness of 10 µm.

### [Example 24]

Except that the cathode catalyst layer used in Example 1 was replaced with the one described below, the same procedure as in Example 1 was carried out to produce a catalyst coated membrane.

### <Cathode catalyst layer>

The solid components are catalyst particles (platinum-ruthenium alloy-supported carbon particles, TEC66V50-HT2, manufactured by Tanaka Precious Metal Technologies Co., Ltd. (catalyst loading rate 50 mass%, Pt/Ru mass ratio = 1/0.52; BET specific surface area 94 m²/g)), which account for 10 parts by mass, and a fluorine based polymer electrolyte (Nafion (registered trademark), product number D2020, manufactured by Chemours Company), which accounts for 4 parts by mass. The ratio (Yc) of the mass of the polymer electrolyte to the total mass of the platinum element and the ruthenium element is 0.8. The cathode catalyst layer had a thickness of 9 µm.

### [Comparative example 2]

Except that the cathode catalyst layer used in Example 1 was replaced with the one described below, the same procedure as in Example 1 was carried out to produce a catalyst coated membrane.

### <Cathode catalyst layer>

The solid components are catalyst particles (platinum-supported carbon particles, TEC10E50E, manufactured by Tanaka Precious Metal Technologies Co., Ltd. (platinum loading rate 50 mass%, BET specific surface area 375 m²/g)), which account for 10 parts by mass, and a fluorine based polymer electrolyte (Nafion (registered trademark), product number D2020, manufactured by Chemours Company), which accounts for 4 parts by mass. The ratio (Yc) of the mass of the polymer electrolyte to the mass of the platinum element is 0.8. The cathode catalyst layer had a thickness of 6 µm.

### [Comparative example 3]

Except that the anode catalyst layer used in Comparative example 2 was replaced with the one described below, the same procedure as in Comparative example 2 was carried out to produce a catalyst coated membrane. Its thickness was adjusted in such a manner that the mass of the platinum element in the anode catalyst layer was 0.3 mg/cm².

### <Anode catalyst layer>

The solid components are catalyst particles (platinum-supported carbon particles, TEC10E50E, manufactured by Tanaka Precious Metal Technologies Co., Ltd. (platinum loading rate 50 mass%)), which account for 10 parts by mass, and a fluorine based polymer electrolyte (Nafion (registered trademark), product number D2020, manufactured by Chemours Company), which accounts for 4 parts by mass. The ratio of the mass of the polymer electrolyte to the total mass of the platinum element and the ruthenium element is 0.8. The anode catalyst layer had a thickness of 7 µm.

### [Example 25]

Except that the anode catalyst layer used in Example 1 was replaced with the one described below, the same procedure as in Example 1 was carried out to produce a catalyst coated membrane.

### <Anode catalyst layer>

The solid components are iridium oxide (IrO₂ catalyst Elyst Ir75 0480, manufactured by Umicore (Ir content 75%)), which accounts for 10 parts by mass, commercially available platinum particles, which account for 1.5 parts by mass in terms of the platinum element, and a fluorine based polymer electrolyte (Nafion (registered trademark), product number D2020, manufactured by Chemours Company), which accounts for 1.3 parts by mass. The ratio (Ya) of the mass of the polymer electrolyte to the mass of the iridium element is 0.17. The anode catalyst layer had a thickness of 9 µm.

### [Example 26]

Except that the anode catalyst layer used in Example 14 was replaced with the one described below, the same procedure as in Example 14 was carried out to produce a catalyst coated membrane.

### <Anode catalyst layer>

The solid components are catalyst particles (IrO₂ catalyst Elyst Ir75 0480, manufactured by Umicore (Ir content 75%)), which accounts for 10 parts by mass, and a fluorine based polymer electrolyte (Nafion (registered trademark), product number D2020, manufactured by Chemours Company), which accounts for 4.5 parts by mass. The ratio (Ya) of the mass of the polymer electrolyte to the mass of the iridium element is 0.60. The anode catalyst layer had a thickness of 11 µm.

### [Example 27]

Except that the mass content of the platinum element in the cathode catalyst layer adopted in Example 1 was changed to 0.15 mg/cm², the same procedure as in Example 1 was carried out to produce a catalyst coated membrane. The cathode catalyst layer had a thickness of 7 µm.

### [Example 28]

Except that the mass content of the platinum element in the cathode catalyst layer adopted in Example 14 was changed to 0.55 mg/cm², the same procedure as in Example 14 was carried out to produce a catalyst coated membrane. The cathode catalyst layer had a thickness of 26 µm.

### [Evaluation]

For the catalyst coated membranes prepared in the Examples and Comparative examples given above, electrolysis performance evaluation was carried out by the procedure described in the above section (4). Results are shown in Table 1.

### [Table 1]

**[Table 1]**

| | separator film | | | | | first catalyst layer (anode catalyst layer) | | | second catalyst layer (cathode catalyst layer) | | |
|---|---|---|---|---|---|---|---|---|---|---|---|
| | polymer electrolyte | compound N | | | thickness (µm) | catalyst | Ya | thickness (µm) | catalyst | Yc | thicknes (µm) |
| | | type | molecular weight | content (parts by mass) | | | | | | | |
| Example1 | PEK block | E1 | 434 | 0.5 | 90 | IrO₂ | 0.17 | 8 | Pt/Ru | 0.74 | 12 |
| Example2 | PEK block | E4 | 587 | 0.5 | 90 | IrO₂ | 0.17 | 8 | Pt/Ru | 0.74 | 12 |
| Example3 | PEK block | E8 | 485 | 0.5 | 90 | IrO₂ | 0.17 | 8 | Pt/Ru | 0.74 | 12 |
| Example4 | PEK block | E10 | 587 | 0.5 | 90 | IrO₂ | 0.17 | 8 | Pt/Ru | 0.74 | 12 |
| Example5 | PEK block | E23 | 617 | 0.5 | 90 | IrO₂ | 0.17 | 8 | Pt/Ru | 0.74 | 12 |
| Example6 | PEK block | E34 | 613 | 0.5 | 90 | IrO₂ | 0.17 | 8 | Pt/Ru | 0.74 | 12 |
| Example7 | PEK block | E36 | 1,033 | 0.5 | 90 | IrO₂ | 0.17 | 8 | Pt/Ru | 0.74 | 12 |
| Example8 | PEK block | F17 | 156 | 0.5 | 90 | IrO₂ | 0.17 | 8 | Pt/Ru | 0.74 | 12 |
| Example9 | PEK block | F19 | 541 | 0.5 | 90 | IrO₂ | 0.17 | 8 | Pt/Ru | 0.74 | 12 |
| Example10 | PEK block | F23 | 2,100 | 0.5 | 90 | IrO₂ | 0.17 | 8 | Pt/Ru | 0.74 | 12 |
| Example11 | PEK block | P1 | 2,500 | 0.5 | 90 | IrO₂ | 0.17 | 8 | Pt/Ru | 0.74 | 12 |
| Example12 | PEK block | P3 | 2,000 | 0.5 | 90 | IrO₂ | 0.17 | 8 | Pt/Ru | 0.74 | 12 |
| Example 13 | PEK block | H3 | 87,000 | 0.5 | 90 | IrO₂ | 0.17 | 8 | Pt/Ru | 0.74 | 12 |
| Example 14 | PEK block | H1 | 180 | 0.5 | 90 | IrO₂ | 0.17 | 8 | Pt/Ru | 0.74 | 12 |
| Example 15 | PEK block | H2 | 195 | 0.5 | 90 | IrO₂ | 0.17 | 8 | Pt/Ru | 0.74 | 12 |
| Example 16 | PEK block | porphyrin | 310 | 0.5 | 90 | IrO₂ | 0.17 | 8 | Pt/Ru | 0.74 | 12 |
| Example 17 | PEK block | E1 | 434 | 0.05 | 90 | IrO₂ | 0.17 | 8 | Pt/Ru | 0.74 | 12 |
| Example 18 | PEK block | E1 | 434 | 3 | 90 | IrO₂ | 0.17 | 8 | Pt/Ru | 0.74 | 12 |
| Comparative example 1 | PEK block | - | - | - | 90 | IrO₂ | 0.17 | 8 | Pt/Ru | 0.74 | 12 |
| Example 19 | Nafion | E1 | 434 | 0.5 | 90 | IrO₂ | 0.17 | 8 | Pt/Ru | 0.74 | 12 |
| Example 20 | PEK block | E1 | 434 | 0.5 | 90 | IrO₂ | 0.17 | 8 | Pt/Ru | 0.8 | 11 |
| Example 21 | PEK block | E1 | 434 | 0.5 | 90 | IrO₂ | 0.17 | 8 | Pt/Ru | 0.69 | 13 |
| Example 22 | PEK block | E1 | 434 | 0.5 | 90 | IrO₂ | 0.17 | 8 | Pt/Ru | 0.74 | 12 |
| Example 23 | PEK block | E1 | 434 | 0.5 | 90 | IrO₂ | 0.17 | 8 | Pt/Ru | 0.74 | 10 |
| Example 24 | PEK block | E1 | 434 | 0.5 | 90 | IrO₂ | 0.17 | 8 | Pt/Ru | 0.8 | 9 |
| Comparative example 2 | PEK block | E1 | 434 | 0.5 | 90 | IrO₂ | 0.17 | 8 | Pt | 0.8 | 6 |
| Comparative example 3 | PEK block | E1 | 434 | 0.5 | 90 | Pt | 0.8 | 7 | Pt | 0.8 | 6 |
| Example 25 | PEK block | E1 | 434 | 0.5 | 90 | IrO₂/Pt | 0.17 | 9 | Pt/Ru | 0.74 | 12 |
| Example 26 | PEK block | H1 | 434 | 0.5 | 90 | IrO₂ | 0.60 | 11 | Pt/Ru | 0.74 | 12 |
| Example 27 | PEK block | E1 | 434 | 0.5 | 90 | IrO₂ | 0.17 | 8 | Pt/Ru | 0.74 | 7 |
| Example 28 | PEK block | H1 | 434 | 0.5 | 90 | IrO₂ | 0.17 | 8 | Pt/Ru | 0.74 | 26 |

### [Example 29]

A separator film was prepared by laminating a protective layer as described below (film thickness 10 µm) on one surface of the same polymer electrolyte membrane as used in Example 1. Except that a cathode catalyst layer was laid on the protective layer side of the separator film while an anode catalyst layer was laid on the polymer electrolyte membrane side thereof, the same procedure as in Example 1 was carried out to produce a catalyst coated membrane. The compound N accounts for 0.46 part by mass relative to 100 parts by mass of the polymer electrolyte contained in the separator film (i.e., the total amount of the PEK block in the polymer electrolyte membrane and the fluorine based polymer electrolyte in the protective layer).

### <Protective layer>

The solid components are carbon black (VULCAN (registered trademark) XC72, manufactured by Cabot Corporation), which accounts for 10 parts by mass, and a fluorine based polymer electrolyte (Nafion (registered trademark), product number D2020, manufactured by Chemours Company), which accounts for 8 parts by mass.

### [Example 30]

Except that that the compound N (E1) used in Example 29 was added to the protective layer instead of adding to the polymer electrolyte membrane, the same procedure as in Example 26 was carried out to produce a catalyst coated membrane. To add the compound N (E1) to the protective layer, the solution of a fluorine based polymer electrolyte (Nafion (registered trademark), product number D2020, manufactured by Chemours Company) was used after replacing the solvent (water and 1-propanol) with NMP. Here, the addition amount of the compound N was adjusted in such a manner that it accounts for 0.1 part by mass relative to 100 parts by mass of the polymer electrolyte contained in the separator film (i.e., the total amount of the PEK block in the polymer electrolyte membrane and the fluorine based polymer electrolyte in the protective layer).

### [Example 31]

### <Preparation of polymer electrolyte membrane>

A PET film of Lumirror (registered trademark) 125T60, manufactured by Toray Industries, Inc., was affixed to and fixed on a SUS plate using tape of Kapton (registered trademark). The polyether ketone based block copolymer synthesized above was dissolved in NMP to prepare a solution (polymer concentration 13 mass%) and it was used for cast-coating of the PET film described above, followed by overlaying it with the porous base material (mesh fabric) described below to impregnate it therewith. In addition, a solution prepared by dissolving 20 g of the polyether ketone based block copolymer synthesized above and 300 mg of the compound N (E4) in NMP was applied over the porous base material and dried to form a film-like membrane. Furthermore, this film was immersed in a 10 mass% aqueous solution of sulfuric acid at 80°C for 24 hours to ensure proton substitution and deprotection reaction, and then it was immersed in a large excess amount of pure water for 24 hours to ensure adequate washing to provide a polymer electrolyte membrane (thickness 70 µm).

This polymer electrolyte membrane is composed of a composite layer containing a porous base material and a polymer electrolyte and two non-composite layers each containing a polymer electrolyte and not containing a porous base material that are laid on both surfaces of the former, thereby forming a three-layer polymer electrolyte membrane. The thicknesses of the respective layers, in order from the PET film, were as follows: non-composite layer 1 (thickness 15 µm), composite layer (thickness 35 µm), and non-composite layer 2 (thickness 20 µm). In this polymer electrolyte membrane, the compound N is contained only in the non-composite layer 2. The compound N in the polymer electrolyte membrane accounts for 0.1 part by mass relative to 100 parts by mass of the polymer electrolyte.

### [Porous base material]

A mesh fabric made of liquid crystal polyester fibers produced according to the procedure described in Production example 1 of International Publication No. WO 2019/188960 was used.

### [Preparation of catalyst coated membrane]

An anode catalyst layer prepared in Example 1 was laid on the non-composite layer 1 of the polymer electrolyte membrane (separator film) formed above and a cathode catalyst layer prepared in Example 1 was laid on the non-composite layer 2 thereof, thereby producing a catalyst coated membrane.

### [Evaluation]

The catalyst coated membranes produced in Examples and Comparative examples described above were subjected to electrolysis performance evaluation. Results obtained are shown in Table 2.

### [Table 2]

**[Table 2]**

| | electrolysis performance evaluation | | |
|---|---|---|---|
| | applied voltage (V) | | voltage increase rate (%) |
| | 0 hour | 2,000 hours | |
| Example 29 | 1.778 | 1.791 | 0.7 |
| Example 30 | 1.78 | 1.793 | 0.7 |
| Example 31 | 1.761 | 1.788 | 1.5 |

### EXPLANATION OF NUMERALS

- 1: water electrolysis cell
- 10: separator film
- 20: first catalyst layer
- 30: second catalyst layer
- 41, 24: separator

## Claims

1. A catalyst coated membrane comprising at least a first catalyst layer and a second catalyst layer disposed in such a manner that they face each other and are located on opposite sides of a separator film containing a polymer electrolyte membrane, wherein the first catalyst layer and the second catalyst layer each contain, as a first metal, the platinum element and/or the iridium element and the first catalyst layer and/or the second catalyst layer further contain, as a second metal, at least one element selected from the group consisting of gold, silver, copper, nickel, palladium, cobalt, rhodium, iron, ruthenium, and osmium and also wherein the separator film includes a compound N having a nitrogen-containing heterocyclic ring.

2. A catalyst coated membrane as set forth in claim 1, wherein the compound N having a nitrogen-containing heterocyclic ring has a nitrogen-containing aromatic five-membered ring or a nitrogen-containing aromatic six-membered ring.

3. A catalyst coated membrane as set forth in either claim 1 or 2, wherein the compound N having a nitrogen-containing heterocyclic ring has a nitrogen-containing aromatic six-membered ring.

4. A catalyst coated membrane as set forth in any one of claims 1 to 3, wherein the compound N having a nitrogen-containing heterocyclic ring has a plurality of nitrogen-containing aromatic six-membered rings.

5. A catalyst coated membrane as set forth in any one of claims 1 to 4, wherein the compound N having a nitrogen-containing heterocyclic ring is a compound as represented by any general formula selected from the group consisting of (D1), (D2), and (D3), 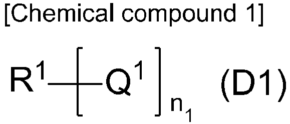
wherein, in the formula, R¹ represents at least one group selected from the group consisting of a divalent or higher-valent hydrocarbon group, an amino group, a sulfide group, a ketone group, a sulfonyl group, a sulfone group, and an ether group; each of the n₁ Q¹ rings independently represents a five-membered or six-membered nitrogen-containing aromatic heterocyclic ring, a condensed ring of such nitrogen-containing aromatic heterocyclic rings, or a condensed ring of such a nitrogen-containing aromatic heterocyclic ring and a hydrocarbon based aromatic ring, wherein these nitrogen-containing aromatic heterocyclic rings and hydrocarbon based aromatic rings may each be substituted by any appropriate substituent, n₁ representing an integer of 2 to 10; 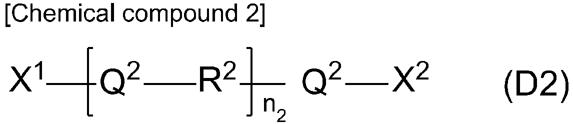
wherein, in the formula, R² represents either at least one group selected from the group consisting of a hydrocarbon group, an amino group, a sulfide group, a ketone group, a sulfonyl group, a sulfone group, and an ether group, or direct bonding; Q² represents a group incorporating one to five of five-membered or six-membered nitrogen-containing aromatic heterocyclic rings, condensed rings of such nitrogen-containing aromatic heterocyclic rings, or condensed rings of such nitrogen-containing aromatic heterocyclic rings and hydrocarbon based aromatic rings, wherein these nitrogen-containing aromatic heterocyclic rings and hydrocarbon based aromatic rings may each be substituted by any appropriate substituent, n₂ representing an integer of 1 to 20; X¹ and X² each independently represent at least one group selected from the group consisting of a hydrogen atom, a halogen atom, a hydrocarbon group, an alkoxy group, an aryloxy group, a carboxyl group, a carboxylic acid ester group, a phosphino group, a phosphine oxide group, a phosphonic acid group, a phosphoric acid ester group, a sulfonic acid group, a sulfuric acid ester group, a hydroxyl group, an amino group, a cyano group, and a nitro group; 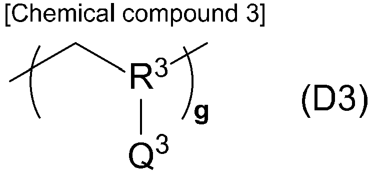
wherein, in the formula, R³ represents either C(R) or a nitrogen atom; R represents a hydrogen atom or an alkyl group; and Q³ represents a five-membered or six-membered nitrogen-containing aromatic heterocyclic ring, a condensed ring of such nitrogen-containing aromatic heterocyclic rings, or a condensed ring of such a nitrogen-containing aromatic heterocyclic ring and a hydrocarbon based aromatic ring, wherein these nitrogen-containing aromatic heterocyclic rings and hydrocarbon based aromatic rings may each be substituted by any appropriate substituent, g representing an integer of 5 to 500.

6. A catalyst coated membrane as set forth in any one of claims 1 to 5, wherein the first catalyst layer is an oxygen generation catalyst layer containing the iridium element as the first metal while the second catalyst layer is a proton reduction catalyst layer containing the platinum element as the first metal.

7. A catalyst coated membrane as set forth in any one of claims 1 to 5, wherein the first catalyst layer is an oxygen reduction catalyst layer containing the platinum element as the first metal while the second catalyst layer is a hydrogen oxidation catalyst layer containing the platinum element as the first metal.

8. A catalyst coated membrane as set forth in claims 6, wherein the second catalyst layer contains the ruthenium element as the second metal.

9. A catalyst coated membrane as set forth in either claim 6 or 8, wherein the second catalyst layer contains carbon particles supporting the platinum element or carbon particles supporting the platinum element and the ruthenium element.

10. A catalyst coated membrane as set forth in either claim 8 or 9, wherein the second catalyst layer contains carbon particles supporting a platinum-ruthenium alloy.

11. A catalyst coated membrane as set forth in any one of claims 1, 6, and 8 to 10, wherein the first catalyst layer contains the iridium element as the first metal, the iridium element being in the form of iridium oxide.

12. A catalyst coated membrane as set forth in any one of claims 1 to 11, wherein the first catalyst layer and the second catalyst layer each further contain a polymer electrolyte.

13. A catalyst coated membrane as set forth in any one of claims 1, 6, and 8 to 12, wherein the first catalyst layer contains the iridium element as the first metal and a polymer electrolyte, with the ratio (Ya) of the mass of the polymer electrolyte to the mass of the iridium element being 0.05 or more and less than 0.5 and also wherein the second catalyst layer contains the platinum element as the first metal, the ruthenium element as the second metal, and a polymer electrolyte, with the ratio (Yc) of the mass of the polymer electrolyte to the total mass of the platinum element and the ruthenium element being 0.25 or more and 1.1 or less.

14. A catalyst coated membrane as set forth in claim 13, wherein the ratio (Ya) is smaller than the ratio (Yc).

15. A catalyst coated membrane as set forth in any one of claims 1 to 14, wherein the thickness of the first catalyst layer and/or the thickness of the second catalyst layer each account for 25% or less relative to the thickness of the separator film, which accounts for 100%.

16. A catalyst coated membrane as set forth in any one of claims 1 to 15, wherein the polymer electrolyte membrane contains a hydrocarbon based polymer electrolyte.

17. A catalyst coated membrane as set forth in either claim 1 or 7, wherein the first catalyst layer is the anode catalyst layer and the second catalyst layer is the cathode catalyst layer.

18. A fuel cell comprising a catalyst coated membrane as set forth in any one of claims 1 to 17.

19. A water electrolysis device comprising a catalyst coated membrane as set forth in any one of claims 1 to 17.

20. A membrane electrode assembly comprising a catalyst coated membrane as set forth in any one of claims 1 to 17 and electrode bases located on opposite sides thereof.

21. A fuel cell comprising a membrane electrode assembly as set forth in claim 20.

22. A water electrolysis cell comprising a membrane electrode assembly as set forth in claim 20.

23. A water electrolysis device comprising a water electrolysis cell as set forth in claim 22.
